(19)

Europäisches
Patentamt
European
Patent Office
Office européen
des brevets

(11)  **EP 1 409 129 B1**

(12)  **EUROPEAN PATENT SPECIFICATION**

(45) Date of publication and mention
of the grant of the patent:
**22.02.2012  Bulletin 2012/08**

(51) Int Cl.:
***B01J 19/08*** *(2006.01)*   ***C10G 15/08*** *(2006.01)*
***C10L 3/00*** *(2006.01)*   ***H05H 1/24*** *(2006.01)*

(21) Application number: **00932500.2**

(22) Date of filing: **16.05.2000**

(86) International application number:
**PCT/US2000/013465**

(87) International publication number:
**WO 2001/010546 (15.02.2001 Gazette 2001/07)**

(54) **Apparatus and method for producing a combustible gas**

Vorrichtung und Verfahren zur Herstellung eines brennbaren Gases

Appareillage et methode de production d'un gaz combustible

(84) Designated Contracting States:
**AT BE CH CY DE DK ES FI FR GB GR IE IT LI LU
MC NL PT SE**

(30) Priority: **11.08.1999  US 372278**

(43) Date of publication of application:
**21.04.2004  Bulletin 2004/17**

(73) Proprietor: **Zenon MG International Holdings LLC
Tarpon Springs FL 34689 (US)**

(72) Inventor: **SANTILLI, Ruggero, Maria
Palm Harbor, FL 34683 (US)**

(74) Representative: **Fioravanti, Corrado et al
Jacobacci & Partners S.p.A.
Corso Emilia 8
10152 Torino (IT)**

(56) References cited:
**US-A- 4 338 509    US-A- 4 957 606
US-A- 5 587 141    US-A- 5 798 497
US-A- 5 876 684**

• **SANTILLI R. M.: "EXPERIMENTAL EVIDENCE OF
MAGNECULES IN GASES AT TOUPS
TECHNOLOGY CORPORATION", HADRONIC
JOURNAL, vol. 21, no. 6, 31 December 1998
(1998-12-31), pages 814-849, XP002952266, USA
ISSN: 0162-5519**

**Description**

**BACKGROUND OF THE INVENTION**

This Patent Application is a continuation-in-part of the U.S. Patent Application Number 09/133,348 filed 8/13/98 entitled New Chemical Species of Gas and its Technologies, which deals with a new chemical species of gases with magnetic bonds called magnecules. In turn, the preceding patent application is a continuation-in-part of the U.S. Patent Application Number 09/106,170 filed on 6/29/98, entitled Electro Magnetion which deals with magnecules in liquids. In turn, the latter Patent Application is a continuation-in-part of U. S. Patent Application no. 08/785,797, filed 1/1/97, which, still in in turn, is a continuation of the U.S. Patent Application Number 08/254,377, filed 6/6/94, which deals with a new technology based on novel effects at mutual distances of particles smaller than the size of their wavepackets, as predicted by the broadening of quantum mechanics called hadronic mechanics.

The capability to produce a combustible gas from underwater arcs between carbon electrodes was discovered and patented in the 18\9-th century (see U. S. patent number 603,058 by H. Eldridge of 1898). In the 20-th, various patents were obtained in this century on improvements of the indicated process, among which I quote U.S. patents 5,159,900 (W. A. Dammann and D. Wallman, 1992); 5,435,274 (W. H. Richardson, Jr., 1995); 5,417,817 (W. A. Dammann and D. Wallman, 1995); 5,692,459 (W. H. Richardson, Jr., 1997), 5,792,325 (W. H. Richardson, Jr., 1998); and (W. H. Richardson, Jr., 1998).

The main process in these inventions is essentially the following. The arc is generally produced between two Carbon rods immersed in water via a DC power unit, such as a welder absorbing 15 KW of real electric power, with the arc operating at low voltage (25-35 V) and high current (300 A to 400 A). Proportionately bigger values of arc voltage and current hold for bigger power units. The high value of the current brings to incandescence the tip of the carbon cathode, with consequential disintegration of the carbon crystal, and release of highly ionized carbon atoms to the liquid. Jointly, the arc separates the water into mostly ionized atoms of Hydrogen and Oxygen. This creates in the immediate cylindrical surroundings of the arc a high temperature plasma, generally of about 7,000 F, which is composed by mostly ionized H, O, C and other atoms.

A number of chemical reactions then occur within or near said plasma, such as: the formation of the H2 and O2 molecule; the burning of H and O into H2O; the burning of C and O into CO; the burning of CO and O into CO2, and other reactions. Since all these reactions are highly exothermic, they cause the typical very intense glow of the arc within water as well as a rapid temperature increase of the water itself. The resulting gases cool down in the water surrounding the arc, and bubble to the surface, where they are collected with various means.

This process produces an excellent combustible gas because its combustion exhausts meet all current EPA requirement without any catalytic muffler at all, and without the carcinogenic pollutants which are contained in the combustion exhausts of gasoline, diesel, natural gas, and other fuels of current use (for numerous independent and comparative measurements of various combustion exhausts.

Despite the indicated excellent combustion characteristics, and despite research and developments conducted by the inventors for decades, the technology of the combustible gas produced by an underwater arc between carbon electrodes has not reached industrial or consumer maturity until now, and no equipment producing said combustible gas for actual usages is currently sold to the public in the U.S.A. or abroad, the only equipment available being that for research or for different types of gases (for instance, gases with implosive characteristics, such as the so-called Brown Gas, which cannot be used for internal combustion engines).

The reasons for such lack of industrial maturity are numerous, and include:

1. EXCESSIVELY SHORT DURATION OF THE CARBON RODS.

According to extensive, supervised, and certified measurements for power units of about 14 KW the electrodes are typically composed of solid Carbon rods of about 3/8 inch in diameter and about 1 foot length, and consume at the rate of about 1.250 inch in length per minute, thus requiring the halting off the operation, and replacement of the electrodes every 10 minutes.

The same tests have shown that, for 100 KW power input, said electrodes are generally constituted by solid carbon rods of about 1 inch diameter and of the approximate length of one foot, and are consumed under a continuous underwater arc at the rate of about 3 inches in length per minute, thus requiring servicing after 3 to 4 minutes of operation.

In either case of 14 KW or 100 KW, current equipment requires servicing after only a few minutes of usage, which is unacceptable on industrial and consumer grounds for evident reasons, including increased risks of accidents for very frequent manual operations in a high current equipment.

2. EXCESSIVELY LOW EFFICIENCY.

As established by repeated, supervised and certified measurements, an underwater arc created by a 13 KW power unit produces 24.5 cubit feet of gas per hour with the arc operating in DC mode at 34 V and 230 A. These settings yield the excessively low Efficiency

$$E = 24.5 \text{ cfh} / 13 \text{ Kwh} = 1.86 \text{ cf/1 KW.}$$

Alternatively, numerous measurements have established that the amount of energy in the combustible gas which can be produced via conventional methods is a fraction of the electric energy needed for its production, an occurrence called commercial under-unity. Evidently, this low efficiency implies a high cost of the gas produced which, under these premises, simply cannot be competitive with respect to other fuels.

3. EXCESSIVELY HIGH CONTENT OF CARBON DIOXIDE.

Various measurements conducted at independent analytic laboratories, have established that the gas produced by an underwater arc generally contains 9%-10% of carbon dioxide, which increases to about 15% in the combustion exhausts. By comparison, gasoline combustion exhausts contain only about 12% $CO_2$, while the combustion exhausts of natural gas have about 8% $CO_2$ content.

Therefore, the gas produced according to pre-existing patents has the highest content of $CO_2$ among all liquid and gaseous fuels of current use, both in the gas itself and in its exhausts.

By recalling that $CO_2$ is the primary source of the green house effect in our planet, it is evident that the current content of $CO_2$ in the gas and its combustion exhausts produced according to pre-existing patents is unacceptable for regular industrial and consumer production and sale.

**SUMMARY OF THE DRAWINGS**

The following drawings are herewith enclosed:

Figure 1 depicts the physical particles in conditions of deep overlapping of their wavepackets, which are at the foundations of this invention.

Figure 2 illustrates a major inconsistency of quantum chemistry for the case of the Hydrogen molecule at absolute zero degree temperature, the prediction by quantum chemistry that all molecules acquire a net magnetic polarization under an external magnetic field due to the assumed independence of the individual atoms.

Figure 3 depicts the new model of molecular structure at the foundation on this invention for the case of the Hydrogen molecule at absolute zero degree temperature, which consists of a new pairing of valence electrons with antiparallel spin into a quasi-particle with charge - 2e, spin 0,an magnetic moment 0, which describes an oo-shaped orbit around the respective two nuclei.

Figure 4 depicts the resolution of the inconsistency of Figure 3 by the new molecular model of Figure 2, the impossibility for the Hydrogen molecule to acquire a net magnetic polarity under an external magnetic field.

Figure 5 depicts another fundamental notion of this invention, the simplest possible magnecule formed by two Hydrogen molecules under a new magnetic bond originating in the polarization of the orbit of the valence electrons into a fixed plane, with resulting strong magnetic fields capable of producing a new bond which is stable at ordinary temperature and pressures.

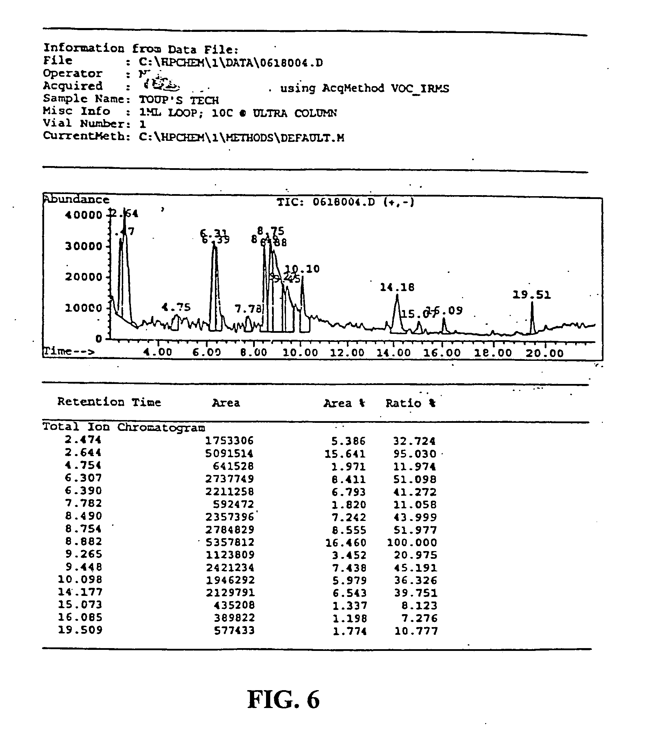

Figure 6 depicts the experimental evidence on the existence of magnecules identified by analysts Louis A. Dee and Norman Wade of the branch of NATIONAL TECHNICAL SYSTEMS (NTS) located at the MCCLELLAN AIR FORCE BASE in North Highland, California, under support from TOUPS TECHNOLOGY LICENSING (TTL) of Largo, Florida. The peaks refer to molecular weights ranging from 40 a.m.u. to 500 a.m.u. for a light gas whose heaviest molecule is $CO_2$ with 44 a.m.u. According to pre-existing chemical knowledge, only the $CO_2$ peak should have appeared in the GC-MS scan with any macroscopic percentage. On the contrary, the $CO_2$ peal is not identifiable at all in the scan; all sixteen peaks should not be present according to quantum chemistry; and the scan therefore provides direct experimental confirmation of the existence of magnecules.

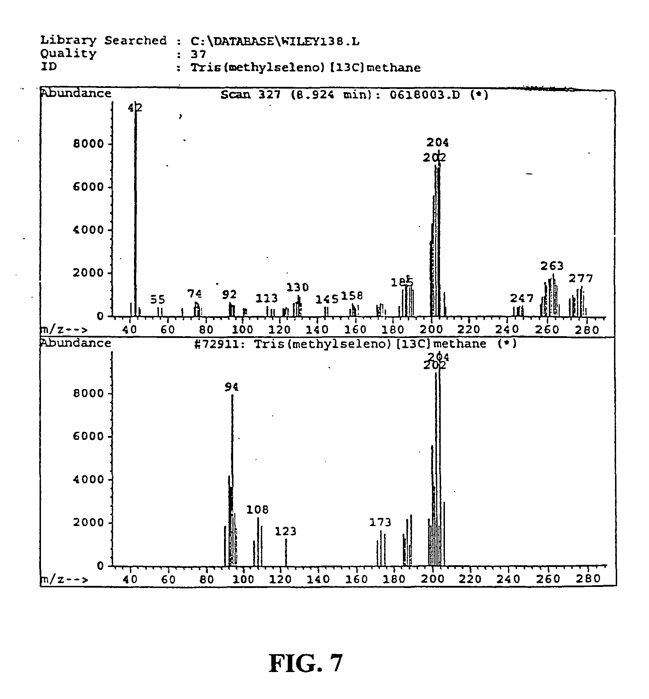

Figure 7 provides an example of the measurements conducted at NTS establishing that the peaks of Fig. 6 resulted to be unknown to the computer following a search among 150,000 substances in the computer memory banks at McOettan Air Force Base. The peak at the top is that at 8.924 minutes of the scan of Figure 6 and that at the bottom shows the lack of its identification by the computer search. Note that, not only the best fit identified by the computer does not match the peak considered, but also the identified substance (methylseleno) cannot possibly exist in the tested gas because of lack of the necessary complex elements. The same situation holds for all remaining fifteen peaks of Figure 6.

Figure 8 depicts the experimental evidence at NTS on the lack of IR signature of the MS peaks of Figure 6. The only IR peak appearing is that of the $CO_2$. No other IR signature was possible for molecules smaller than $CO_2$ because the scan was between 40 a.m.u and 500 a.m.u.

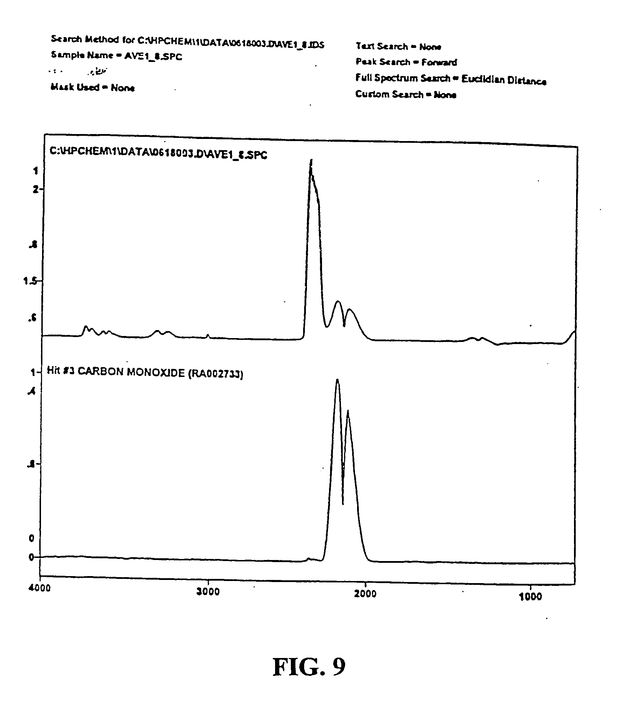

Figure 9 depicts the experimental evidence at NTS on the alteration of the IR signature of magnetically polarized conventional molecule $CO_2$(top), including the appearance of two new peaks which are absent for the conventional IR signature of said molecule. Note that, in view of said alterations, the computer has erroneously identified the IR signature as that of the CO (bottom).By recalling that each IR peak represents an internal molecular bond and related binding energy, the two novel peaks indicate an anomalous energy content of the conventional $CO_2$ molecule when magnetically polarized.

Figure 10 depicts another lack of identification in the computer search of other IR small peaks of the IR scan of Figure 7. The best possible match offered by the computer (lower peak) does not even partially recover the detected IR peak (top), while suggesting a substance (Acetamide) which cannot possibly exist in the tested light gas because of lack of the necessary substances.

Figure 11 reproduces a photographic evidence of magnecules in liquids obtained by Dr. Konrad Lerch, Director of the Research Laboratory of the Givaudan-Roure (GR) Corporation in Dubendorf, Switzerland, on in the GR fragrance oil "ING258IN Test 2" under magnifications 10X and 100X. Said fragrance oil was perfectly clear prior to the magnetic treatment. The magnetic polarization of atoms and molecules has created magnecules with a brick-layer structure (top view). The magnecules are the dark areas between the individual bubbles (lower view).

Figure 12 depicts the scan at an LC-MS/UVD equipment conducted on the GR fragrance oil "ING258IN Test 2" of Figure 11 prior to any magnetic treatment, as conducted by Prof. Kenneth G. Furton, Chairman, and Prof. Piero R. Gardinali, Laboratory Director, DEPARTMENT OF CHEMISTRY of FLORIDA INTERNATIONAL UNIVERSITY (FIU), Miami, Florida.

Figures 13 and 14 depicts the LC-MS scan of the GR fragrance oil "ING258IN Test 2" following the magnetic treatment that lead to the view of Picture 11. Note the dramatic alteration of the MS peaks of Figure 12 as well as the appearance of large new peaks which can only represent the magnecules since no new substance was added to the original oil.

Figure 15 depicts a representative gas or liquid magnecule of this invention consisting of the magnetic bond of only two dimers of two conventional molecules, the remaining atoms being not necessarily subjected to the same magnetic bond.

Figures 16a and 16b are an exterior side view and an exterior front view of a system constructed in accordance with the preferred embodiment of the present invention.

Figure 17 is a front elevational view of the control panel used in association with the equipment of Figure 16a and 16b.

Figures 18a and 18b are cross sectional views taken along lines 18a-18a and 18b-18b of Figures 16a and 16b.

Figure 19 is a cross sectional view taken along line 19-19 of Figure 18b.

Figure 20 is a cross sectional view similar to Figure 19 but illustrating an alternate embodiment of the invention.

Figure 21 is a cross sectional view similar to Figures 19 and 20 but illustrating yet a further alternate embodiment of the invention.

Figure 22a is a cross sectional view taken along line 22-22 of Figure 18a.

Figure 22b is a top plan view taken along line 22b-22b of Figure 22a.

Figures 23a and 23b are cross sectional view of alternate embodiments for the liquid magnetic polarization unit.

Figure 24 is a cross sectional view of a system similar to that shown in Figure 21 but designed for the treatment of waste.

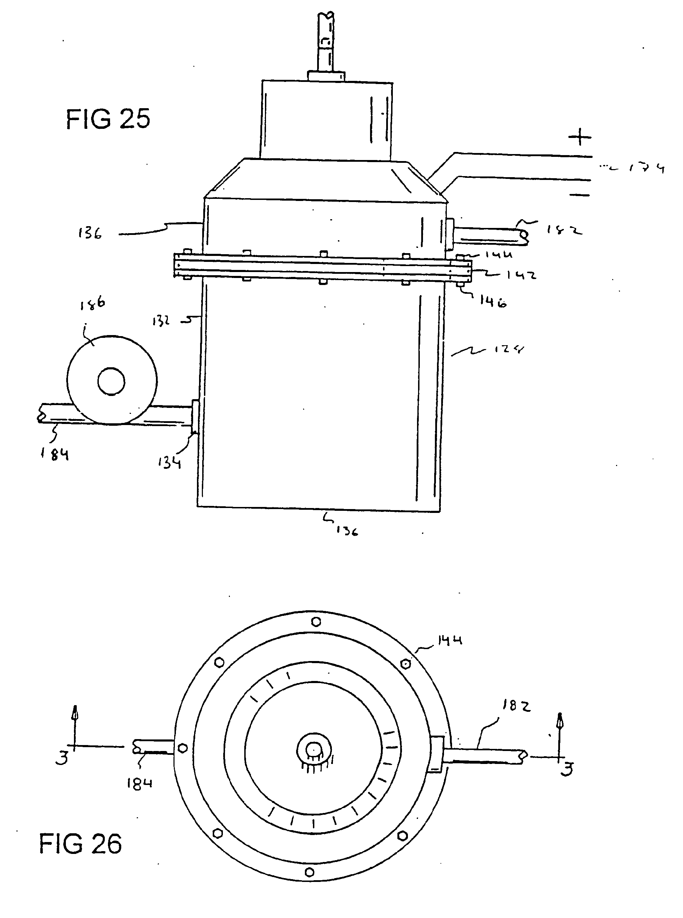

Figure 25 is a side elevational view of the preferred embodiment of the invention.

Figure 26 is a cross sectional view taken aiong line 26-26 of Figure 25.

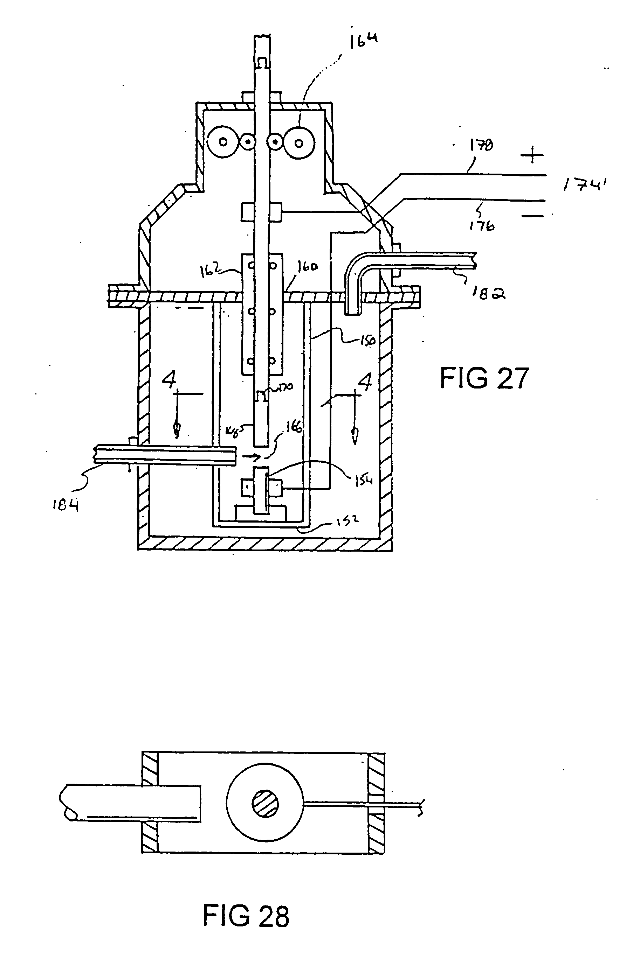

Figure 27 is a cross sectional view taken along line 27-27 of Figure 26.

Figure 28 is a cross sectional view taken along line 28-28 of Figure 27.

The invention provides a method for the production of combustible gas as defined in claim 1, and an equipment according to claim 14. Preferred embodiments are disclosed in the dependent claims

## BASIC THEORETICAL AND EXPERIMENTAL RESEARCH UNDERLYING THIS INVENTION

This invention is not the result of empirical studies based on rods, levers, and other electro-mechanical devices. Instead, this invention is the result of systematic basic research conducted by this inventor for decades at the particle, atomic and molecular levels, combined with systematic and comprehensive experimental tests and measurements. An outline of these studies is essential for the understanding of this invention.

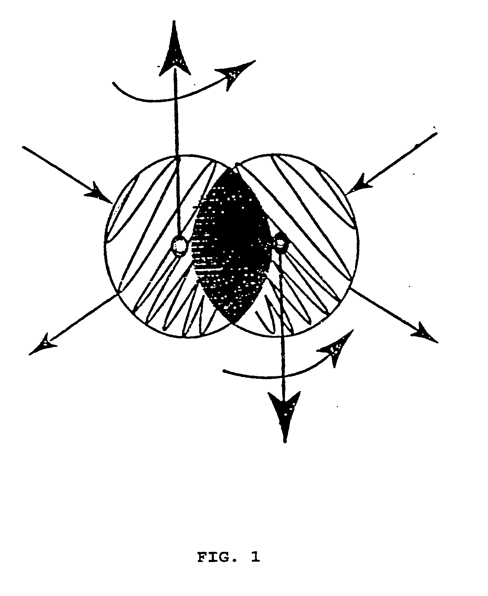

The basic research herein considered began in 1978 when this inventor was a member of Harvard University with financial support from the U.S. Department of Energy, under which he proposed a generalization of quantum mechanics called hadronic mechanics (R. M. Santilli, Hadronic Journal, Vol. 1, pages 574-901, 1978). Because of its mathematical structure and physical axioms, quantum mechanics can only represent particles as points. resulting in a theory which is linear, local and potential. These structural features are efficient for a representation of the atomic structure and all systems in which particles are at mutual distances much bigger than the size of their wavepackets, but not for very small particle distances. Hadronic mechanics was proposed to represent particles in conditions of deep overlapping of their wavepackets (Figure 1). The latter conditions are well known to be nonlinear in the wavefunctions, nonlocal-integral over the volume of overlapping, and non derivable from a potential. In fact, the interaction due to deep overlappings of the wavepackets is of contact type, thus having zero range and, consequently, not admitting any potential because the latter require action-at-a-distance. Hadronic mechanics was constructed to achieve an axiomatically consistent and invariant representation of the most general possible nonlinear, nonlocal and nonpotential effects, while preserving conventional quantum laws and admitting quantum models as particular cases.

Numerous mathematicians, theoreticians and experimentalists have studied hadronic mechanics following said original proposal by this inventor. The new mechanics has now reached operational maturity with applications and experimental verifications in particle physics, nuclear physics, astrophysics, cosmology and other fields (see R. M. Santilli, "Elements of Hadronic Mechanics", Vol. I and II, 1995, Ukraine Academy of Sciences, Kiev, 1996; and R. M. Santilli, Foundations of Physics, Vol. 27, pages 625-729, 1997).

Subsequently, hadronic mechanics has been successfully used for the construction of a generalization of superconductivity under the name of Hadronic superconductivity. In essence, clear experimental evidence has established that superconductivity is due to a deep correlation of electrons into quasi-particle states with antiparallel spins called Cooper pairs, with a configuration similar to that of Figure 1, although for bigger mutual distances. It is evident that quantum mechanics cannot represent such a pair, because it require a specifically attractive force against the repulsive Coulomb force of the two identical electrons. In fact, the only quantum treatments of superconductivity are of statistical character, that is, they refer to a statistical collection of Cooper pairs, and not to individual Cooper pairs. Hadronic mechanics and superconductivity have resolved for the first time this fundamental problem. In fact, the additional nonlinear, nonlocal and nonpotential effects due to deep wave-overlappings of particles with antiparallel spins have resulted to be so attractive to overcome the repulsive Coulomb force. The new theory then proved to be in remarkable agreement with experimental evidence (see A. O. E. Animalu and R. M. Santilli, International Journal of Quantum Chemistry, Vol. 29, pages 175-187, 1995, and papers quoted therein).

Despite outstanding advances throughout this century of clear historical proportions, it is little known that quantum chemistry has numerous insufficiencies, such as:

1) Lack of a sufficiently strong bonding force among the neutral atoms of a molecule. The forces currently assumed in molecular bonds are the exchange, van der Waals and other forces conceived for nuclear structures, in which they are known to be weak. Therefore, quantum chemistry still misses in the molecular structure the equivalent of the strong force in the nuclear structure.

2) Impossibility to explain why the hydrogen, water and other molecules have only two hydrogen atoms. The nuclear-type forces currently used for molecular bonds were specifically conceived for an arbitrary number of nuclear constituents, a feature that is evidently preserved in its entirety at the molecular level.

3) Impossibility to achieve an exact representation of molecular binding energies from unadulterated quantum principles. Despite one century of attempts, quantum chemistry still misses about 2% of experimental values of binding energies, e.g., in the self-consistent treatments.

4) More accurate representations of molecular characteristics have been recently achieved, but only via structural modification of the Coulomb law with Gaussian and other factors called screenings. On rigorous scientific grounds, these manipulations are in violation of the basic laws of quantum mechanics and chemistry, e.g., because they prohibit the very existence of a quantum of energy. In fact, a quantum of energy cannot exist under Gaussian and other modifications of the same law for numerous reasons, such as lack of stability of the orbits between which a quantum of energy can be emitted or absorbed.

5) Impossibility to conduct meaningful thermochemical calculations. The 2% currently missing in the binding energy under strict quantum laws corresponds to about 950 Kcal/mole, while an ordinary chemical reaction requires about 20 Kcal/mol. Therefore, quantum chemistry implies an error in thermodynamical calculations which is 50 times the energy value of an average thermochemical reaction.

6) Excessive computer times in calculations. Despite the advent of modern computers, molecular calculations according to quantum chemistry require at times weeks or months of computer usage.

7) Dramatic disagreement between electron correlations used in current orbital theories, which refer to an arbitrary number of electrons, and the experimental evidence establishing that correlations only occur between pairs of electrons.

8) Dramatic disagreements between quantum chemical predictions and experimental values of electric and magnetic moments of molecules, which are at times wrong even in the sign, let alone the numerical value.

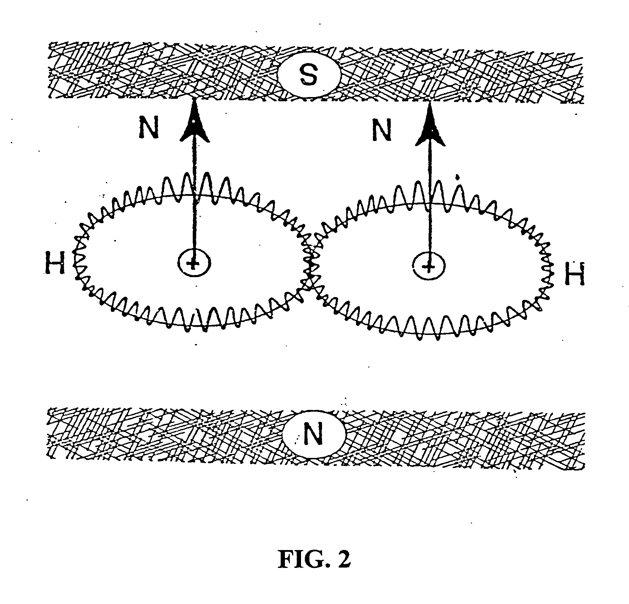

9) Dramatic disagreement between the prediction of quantum chemistry that all molecules are ferromagnetic and the experimental reality according to which molecules are generally diamagnetic, except for a relatively few cases. The sole use of the nuclear-type exchange and other forces for molecular bonding has the necessary consequence that each atom of a molecule preserves its individuality. One of the most rigorous disciplines of this century, quantum electrodynamics, establishes that, when such a quantum model of molecules is exposed to a sufficiently strong external magnetic field, the orbit of the valence electrons are individually polarized into fixed planes. In this case the magnetic field caused by the plane rotation of the charge of the valence electrons must be such to expose magnetic polarities opposite to those of the external field. This implies that all molecules must acquire a total net magnetic polarity under an external magnetic field (Figure 2), thus being ferromagnetic, a consequence which is in dramatic disagreement with experimental evidence according to which only very few substances are ferromagnetic.

It is evident that, under all these deep insufficiencies, quantumchemistry does not permit a serious scientific study of the rather complex physical and thermochemical processes occurring in the creation of a combustible gas via an underwater arc between Carbon electrodes. For instance, it makes no scientific sense to attempt the study the thermochemical reactions of said gas with quantum chemistry, because the indicated error imply deviations 50 times the energy involved. This mandates the use for this invention of a theory more accurate than quantum chemistry.

In view of the above insufficiencies, hadronic mechanics and superconductivity have been recently used for the successful construction of a generalization of quantum chemistry under the name of hadronic chemistry (see R. M. Santilli and D. D. Shillady, Hadronic Journal, Vol. 21, special issue number 6, December 1998).

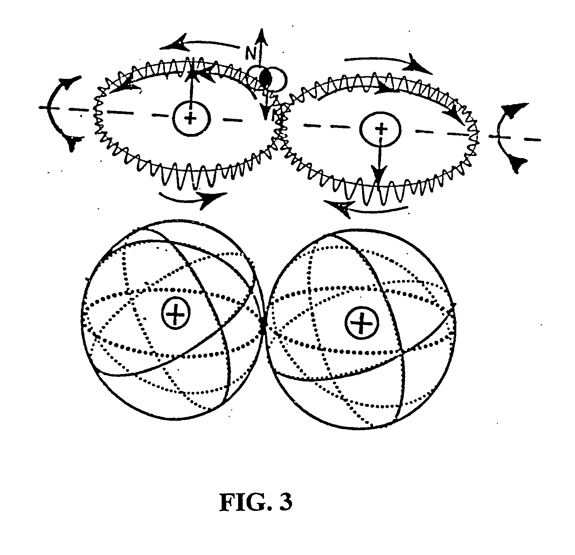

The novel hadronic chemistry has permitted the resolution of all the above insufficiencies of quantum mechanics (see R. M. Santilli and D. D. Shillady, Hadronic Journal, Vol. 21, special issue number 6, December 1998, and references quoted therein). To begin, hadronic chemistry introduces a new very strong bonding force between pairs of valence electrons coupled at short distances with antiparallel spins, which is precisely the equivalent for molecules of the strong force in nuclei. In essence, the force due to the nonlinear, nonlocal and nonpotential effects of deep wave-overlappings (Figure 1) is so attractive to overcome the repulsive Coulomb force by causing two valence electrons from two different atoms to bond themselves into a quasi-particle state, called isoelectronium, with charge -2e, spin zero and magnetic moment zero, which isoelectronium describes an oo-shaped orbit around the respective two nuclei, much along the trajectory of a planet in certain binary stars (Figure 3).

Hadronic chemistry has then explained the reason why the Hydrogen and water molecules can only have two Hydrogen atoms; has achieved exact-numerical representations of binding energies, electric and magnetic moments and other molecular features accurate to the seventh digit; and has resolved all other insufficiencies of quantum chemistry (see: R. M. Santilli and D. D. Shillady, "A new isochemical model of the hydrogen molecule", and "A new isochemical model of the water molecule", in press at International Journal of Hydrogen Energy, Elsevier Science Publisher, Oxford, England; and the monograph currently under preparation by R. M. Santilli and D. D. Shi!lady, "Ab Initio Hadronic Chemistry").

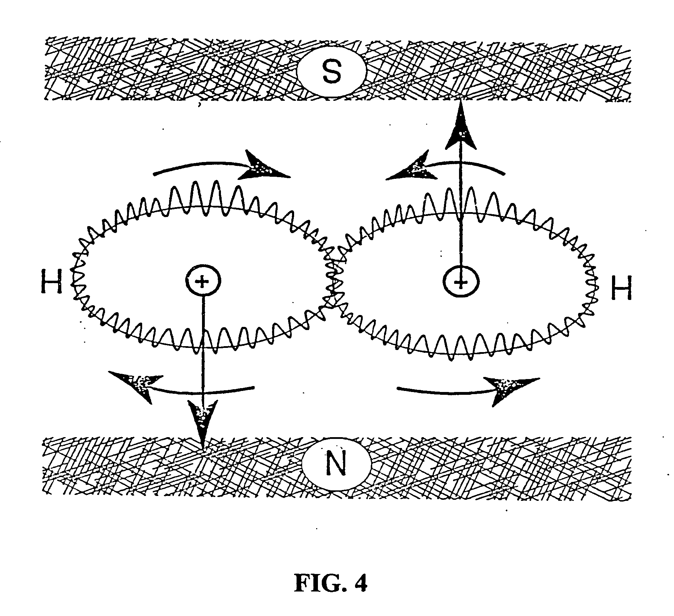

Particularly intriguing and significant is the resolution by hadronic chemistry of inconsistency 9) of quantum chemistry, the prediction that all molecules are ferromagnetic. As recalled above, the pair of two valence electrons into the isoelectronium describes an oo-shaped orbit around the respective two nuclei (Figure 3). This implies that the rotation of one o-orbit is necessarily the opposite of the rotation of the other o-orbit. Still in turn, this implies that, under an external magnetic field, the two atoms of the molecule acquire opposite magnetic polarities, thus avoiding the same net polarity of inconsistency 9) of quantum chemistry (Figure 4). Therefore, for the first time in scientific records, hadronic chemistry has represented in a conceptually, mathematically and numerically correct way the physical evidence according to which molecules do not generally acquire a net magnetic polarity under an external magnetic field, thus being diamagnetic. The sole exception is that of a few molecules which do acquire a net magnetic polarity under an external; magnetic field, thus being ferromagnetic, because they possess unpaired valence electrons which, as such, are free to acquire a net magnetic polarity.

More recent theoretical and experimental studies based on hadronic mechanics, hadronic superconductivity and hadronic chemistry have identified the existence of a basically novel chemical species, called magnecules, which consist of individual atoms A, B, C, and molecules C-D, E-F-G, etc., under a new magnetic bond originating in the polarization of the orbit of the valence electrons into fixed planes, rather than originating in the intrinsic magnetic moments of nuclei and electrons.

In fact, various scientific studies (see R. M. Santilli, Hadronic Journal, Vol. 21, pages 789-894, 1998; M. H. Kucherenko and A. K. Aringazin, Hadronic Journal, Vol. 21, pages 895-902, 1998, and other publications) have established that, when the valence and other electrons are caused by external fields to rotate in a fixed plane, rather than in all directions in space as occurring in an unpolarized atom, their orbital magnetic moments result to be 1,315 times bigger than the intrinsic magnetic moment of nuclei, thus justifying the existence of the new chemical species of magnecules, which results to be stable at ordinary temperatures and pressures.

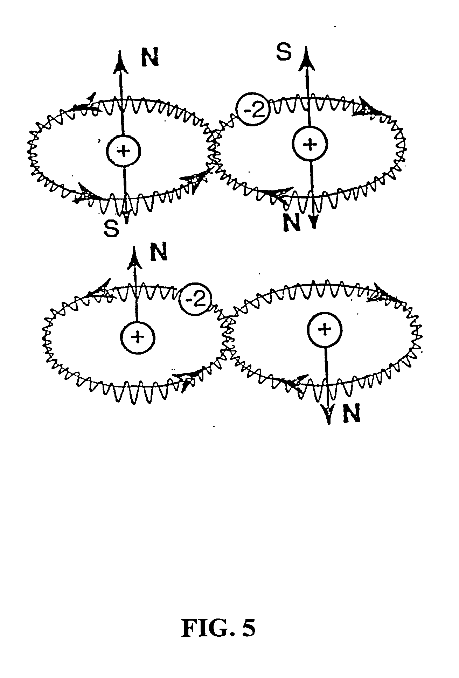

By denoting the conventional valence bond with the sign -, the new magnetic bond with the symbol x and the North-South (South-North)polarization with the subscripts 8(9), the simplest possible magnecule is given by {H8-H9} x {H8-H9}, where the polarized atom H8 of the first molecule is strongly attracted to the polarized atom H8 of the second molecule, because the magnetic polarities in the two superpose atoms H8 and H8 are opposite to each other (Figure 5). A generic magnecule then has the structure A8 x {D8-E9} x B8 x {F8 - G89-H8} x ...., where A and B are generic individual atoms, and D-E, F-G-H are generic molecules.

While molecules have a well defined structure, this is not the case for magnecules because they can acquire or lose additional atoms or molecules due to collisions or other events. It then follows that, while molecules have unique molecular weights, magnecules have varying molecular weights (see for details and experimental evidence R. M. Santilli, Hadronic Journal, Vol. 21, pages 789-894, 1998). -

It should be stressed that the existence of magnecules in gases have been established beyond scientific doubt at various independent analytic laboratories equipped with Gas-Chromatographic Mass-Spectrometry (GC-MS)and Infra-Red Detectors (IRD) capable to operate at low or at least at atmospheric temperature.

Numerous experimental verifications have been conducted at the analytic laboratories of: National Technical Systems at McLellan Air Force Base in California; Pinellas County Forensic Laboratory in Largo, Florida; Marine Science Laboratory of the University of South Florida in St. Petersburg; Tekmar-Dohrmann Corporation in Cincinnati, Ohio; Research Laboratories of Givaudan-Rouse Corporation in Dubendorf, Switzerland; and other laboratories.

Such verifications are based on the following measurements measurements (see for details R. M. Santilli, Hadronic Journal, Vol. 21, pages 789-894, 1998):

I) GC-MS DETECTION OF ANOMALOUS LARGE PEAKS WITH BIG MOLECULAR WEIGHTS(FIGURES 6 AND 7). Numerous independent GC-MS measurements have been conducted in light gases produced under strong magnetic fields with conventional largest molecule $CO_2$, which has 44 units of molecular weight. These measurements have established the presence in the same light gases of large peaks with macroscopic percentages having molecular weights much larger than that of CO2, such as 76, 98, 101, etc. (Figure 6). In particular, the latter peaks result to be unknown in the computer search conducted on the memory banks of 150,000 molecules existing the computers of the McLellan Air Force Base(Figure 7), thus establishing the existence of new bonds of conventional atoms and molecules.

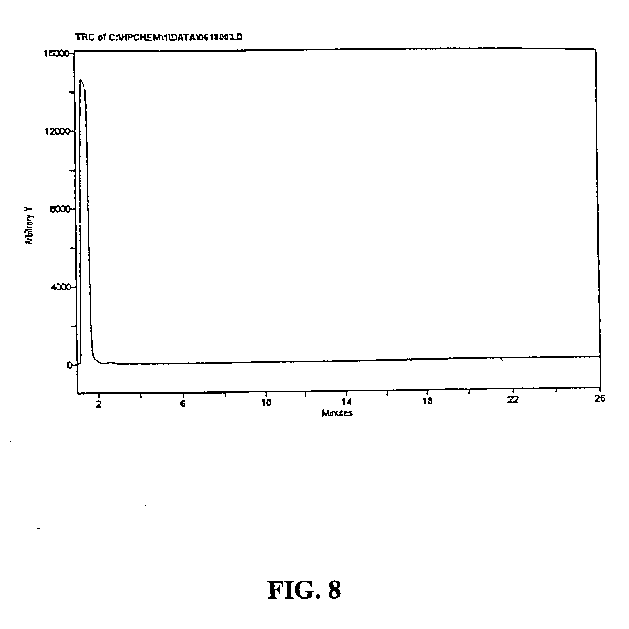

II) LACK OF IR SIGNATURE BY THE PRECEDING ANOMALOUS CLUSTERS (FIGURES 8). Recall that all atoms bonded into molecules by valence couplings must exhibit a characteristic infrared signature under the GC-MS/IRD analysis. On the contrary, GC-MS/IRD measurements of gas produced under strong magnetic fields have established that the anomalous large peaks indicated above have no IR signature at all, the sole IR signature being that of the conventional molecules constituting the clusters (Figure 8). This establishes that the new species is made-up of conventional atoms and molecules under a new bond. The studies herein considered have then established that the sole possible new bond sufficiently strong to represent anomalous peaks is the indicated magnetic bond between polarized atoms and magnecules.

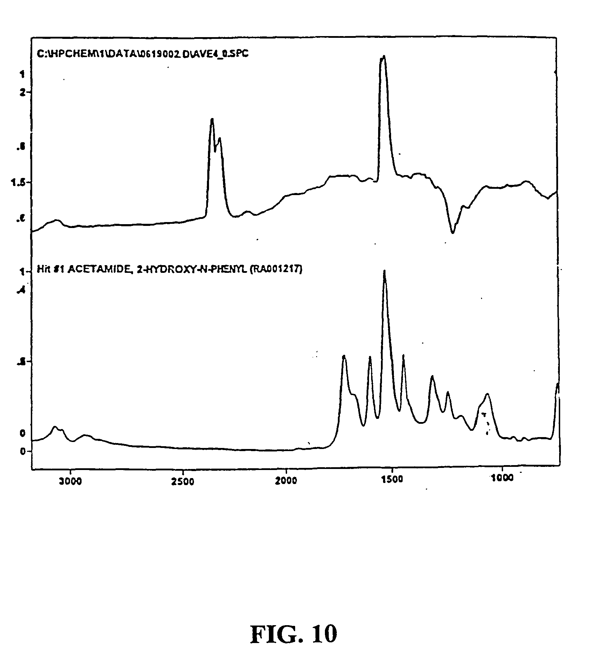

III) ANOMALOUS CHARACTER OF THE IR SIGNATURE OF CONVENTIONAL MOLECULES(FIGURES 9 AND 10). The preceding GC-MS/IRD measurements have additionally established that the IR signature of conventional gas molecules produced under strong magnetic fields are themselves anomalous, because deformed in shape and energy content with respect to the conventional signatures. For instance, Figure 9 depicts the IR signature of CO2 with two anomalies, first the alteration of the shape of the main IR peak and, second, the appearance of two smaller peaks not existing in the IR signature of the conventional CO2 molecule. As a result of theses anomalies, the computer has erroneously identifies in Figure 9 the IR signature as that of the CO, while the correct one is that of CO2. Other IR peaks also result to be unidentified by the computer search among 150,000 IRT signatures (Figure 10).

All the above anomalies disappear when the GC-MS/IRD measurements are conducted at 150 degrees C or more, by confirming the magnetic character of the bonds in magnecules. In fact, all magnetic effects are known to disappear at temperatures bigger than a characteristic value depending on the selected substance, called the Curie point. A comprehensive presentation including complete documentations of GC-MS/IRD analyses conducted at various independent laboratories is available in the forthcoming monograph by R. M. Santilli, "The New Chemical Species of Magnecules".

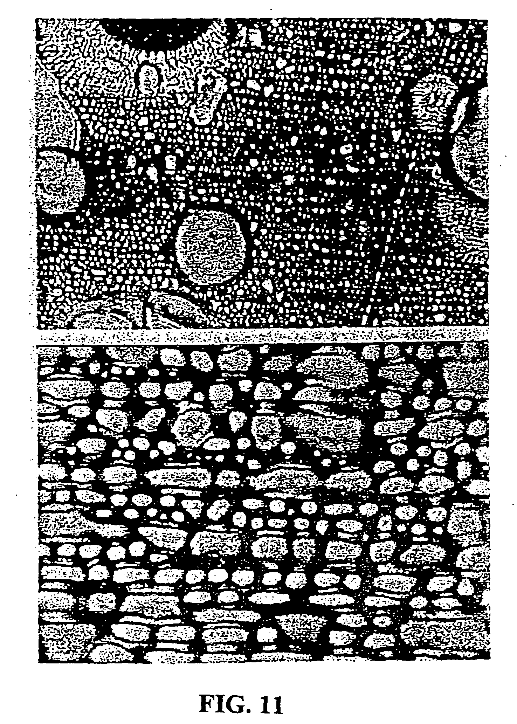

The existence of magnecules in liquids has also been experimentally established beyond scientific doubt. Figure 11 depicts photographic evidence on the existence of liquid magnecules obtained by Dr. Konrad Lerch, Director of the Research Laboratory of the Givaudan-Roure (GR) Corporation in Dubendorf, Switzerland, on in the GR fragrance oil "ING258IN Test 2" under magnifications 10X and 100X.

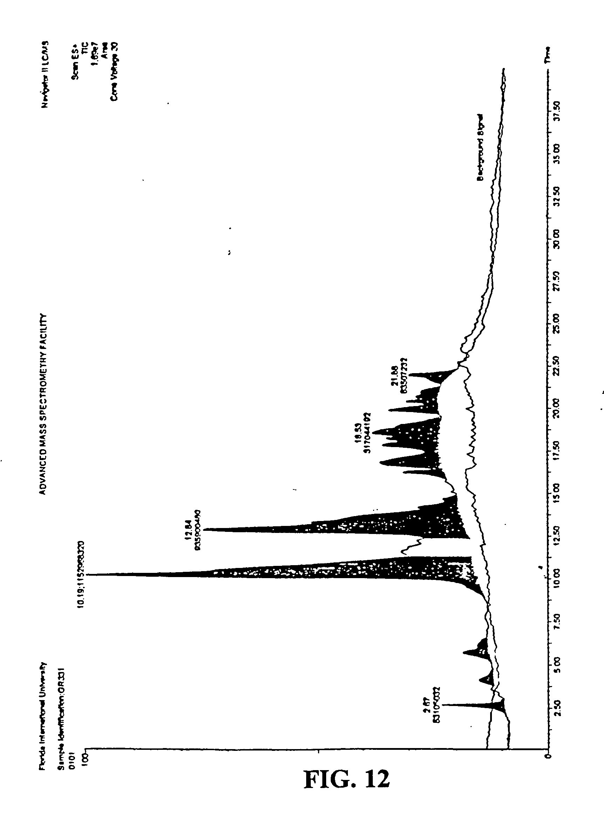

Figure 12 depicts the scan via an LC-MS/UVD equipment on the GR fragrance oil ôING258IN Test 2ö of Figure 11, although prior to any magnetic treatment, conducted by Kenneth G. Furton, Chairman, and Piero R. Gardinali, Laboratory Director, DEPARTMENT OF CHEMISTRY of FLORIDA INTERNATIONAL UNIVERSITY (FIU), Miami, Florida.

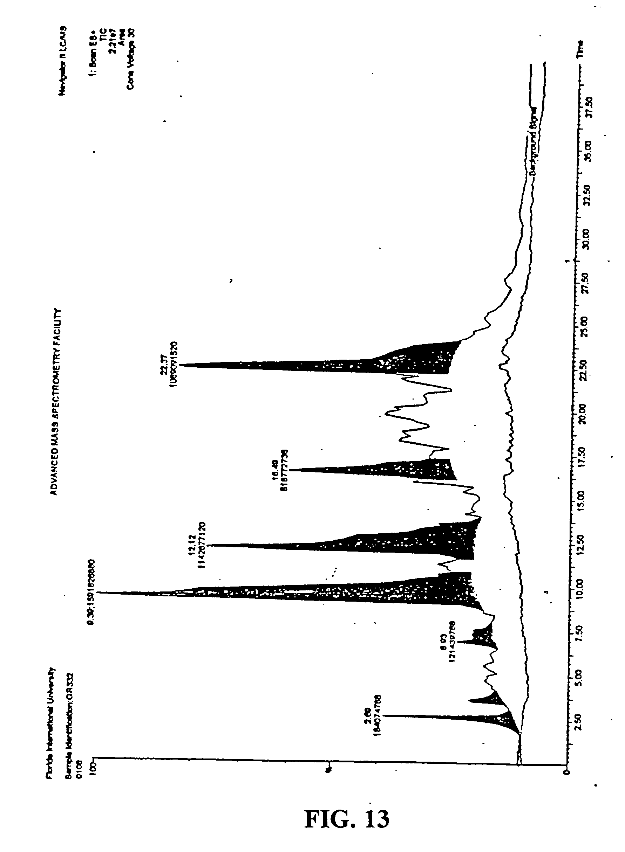

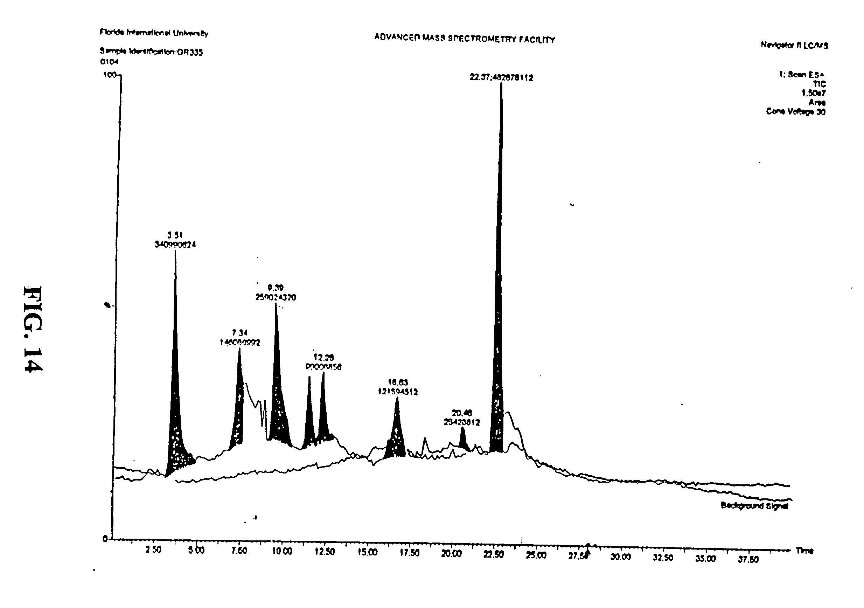

Figures 13 and 14 depict the LC-MS scan of the GR fragrance oil "ING258IN Test 2" at Florida International University following the magnetic treatment that lead to the view of Figure 11. Note the dramatic alteration of the peaks of Figure 12 as well as the appearance of large new peaks which represent precisely the magnecules of this invention since no new substance was added to the original oil.

In summary, all GC-MS/IRD measurements preceding this invention were done via the use of conventional analytic methods essentially consisting in the operation of the equipment at high temperature, in which case no detection of magnecule is possible. The latter have been discovered at both the gaseous and the liquid states because, first, they have been theoretically predicted by this inventor and, second, they have been searched for via the appropriate conditions under which the can be detected.

## MAGNEGASES AND MAGNELIQUIDS

At the time of the discovery in the last century of the combustible character of the gas bubbling to the surface from underwater arcs among carbon electrodes, the analytic methods of the time were primitive. Therefore, the chemical composition of the gas was essentially unknown. In fact, U.S. Patent Number 603,058 (H. Eldridge, 1898) generically refers to a hydrogen gas, seemingly indicating a gas primarily composed by hydrogen, a denomination which was and remains meaningful to this day.

The subsequent inventions related to the same gas, such as U.S. Patent Numbers 5,159,900 (W. A. Dammann and D. Wallman, 1992), 5,435,274 (W. H. Richardson, Jr., 1995), 5,417,817 (W. A. Dammann and D. Wallman, 1995), 5,692,45 (W. H. Richardson, Jr., 1997), 5, 792,325 (W. H. Richardson, Jr., 1998), had the opportunity to identify the conventional chemical composition of said combustible gas via modern analytic equipment. For instance, the gas originating from arcs between Carbon electrodes within ordinary tap water resulted to consist of about 45%-48% H2, 36%-38% CO, 9%-10 CO2, 1%-2% 02, plus parts per millions of various other molecules also composed by H, O, and C (for a report and documentation of comprehensive analytic measurements, see R. M. Santilli, Second Certification of October 16, 1998, athttp://www.toupstech.com/aquafuel/aquall.html).

The basic theoretical and experimental research outlined above in this patent application has permitted the discovery that gases produced via an electric arc under liquids are primarily composed by the new chemical species of magnecules, and are herein casted magnegases. This is explained by the fact that arcs possess in their cylindrical surroundings very strongest magnetic fields, of the order of 10 Tesla and more evidently depending on the current. The H, O and C atoms inside the plasma surrounding the arc are therefore exposed to such a strong magnetic field. Quantum electrodynamics then establishes that the valence and other electrons of such atoms simply cannot orbit in all directions in space, as it is the case for conventional atoms, and must orbit instead in fixed planes, thus creating magnetic moments which are 1,315 times stronger than nuclear magnetic moments, as indicated above. Still in turn, atoms and molecules possessing such strong magnetic fields attract each other, resulting in the structure of a magnegas, that is, a gas whose chemical composition is that of magnecules, as established beyond possible doubt by the several GC-MS/IRD measurement at various independent laboratories outlined earlier (for complete documentations of all various measurements, see the forthcoming monograph by R. M. Santilli, "The New Chemical Species of Magnecules").

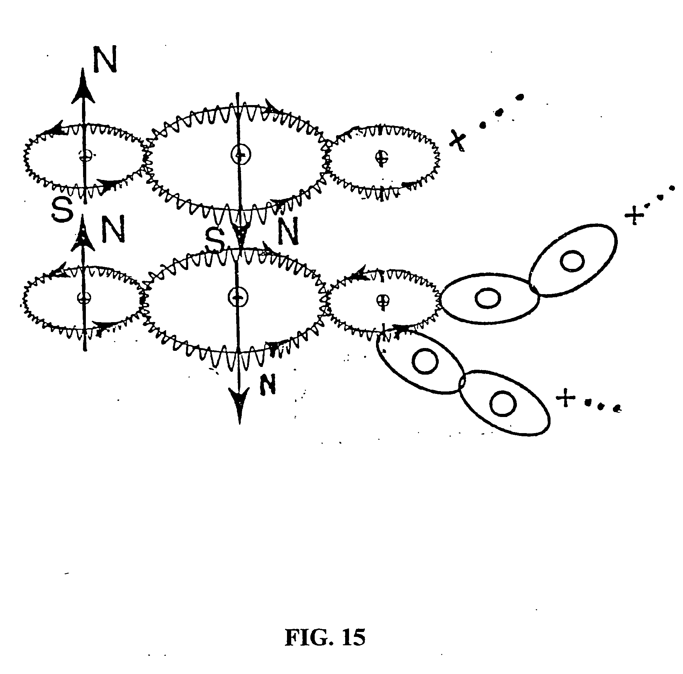

As an illustration, consider the magnegas produced by an arc between Carbon electrodes without ordinary tap water. Such a gas is constituted by H, O, and C atoms and their molecules combined into generic magnecules of the type {H8-H9} x {H8-H9}, {H8-H9}x {C8-08}, {H8-H9}x{C8-09}x {H8-H9}x {C8-09}, H8 x {H8-H9} x {C8-09} x 08 x {08-C89-08}x.... This results in very small, intermediate and very large magnecules which have been experimentally established beyond scientific doubt. A representative example of a chemical component of a magnegas is schematically presented in Figure 15 via the magnetic bond of the dimers of two different molecules.

By recalling that any peak in the IR signature represents an internal bond, the experimental detection in Figure 9 of two new IR peaks establishes the capability of storing in the magnetically polarized CO2 molecule more energy than that in the conventional unpolarized molecule. The same result holds also for other gas molecules. Repeated measurements and experimentations have established that the increase of energy content in magnetically polarized gases can be as high as 111 % the energy content of the same gas in conventional un-polarized conditions. These measurements were conducted in a magnetically polarized gases which resulted to have 380 BTU per cf while the same gas in unpolarized condition has 180 BTU, thus implying 111 % increase of energy content.

The above discovery is of evident paramount importance for this invention because magnetically polarized combustible gases composed by magnecules may contains more than double the energy of the same gases without magnecules.

Equally important for this invention are the new liquids composed by magnecules of conventional liquids, hereon called magneliquids. An important example is the magnecule between water and carbon which can be written {H8-089-H8}x{C8-C9}, and magnecules between the water molecule and organic chain of Carbon rich molecules schematically represented in Figure 15.

It should be stressed that magnegases and magneliquids can be easily identified via existing GC-MS/IRD and LC-MS/UVD equipment, respectively, operating at atmospheric temperature, thus permitting the unquestionable identification and proof of possible infringements of this invention. In fact, possible infringements are easily identified via GS-MS/IRD measurements of Anomalies I, II and III identified above (Figure 6 to 14).

The first main novelty of this invention over pre-existing patents is the base liquid used to produce the combustible gas, which is itself new. In fact, said liquid is composed by water, carbon-rich and other molecules at least in partial magnetic bond with each other into magnecules (Figures 11 to 14). The base liquid used in this invention is therefore called a magneliquid. This novelty is evidently absent in pre-existing patents which produce a combustible gas from ordinary liquids with a conventional molecular structure only.

The second main novelty of this invention is that the use of magneliquids permits the achievement of high concentrations of carbon in water in such a percentage to eliminate altogether the need for carbon rods as the source of Carbon for the creation of the combustible gas. Note that the magnetic bond of the Carbon to water is in addition to possible solutions and it is much preferable than suspensions evidently because magnetic bonds imply much smaller inter-atomic distances, with consequential better behavior under the arc. This additional feature is also not possible for pre-existing patents. The third main novelty of this invention is that magneliquids permit the increases of the energy content of the gas produced beyond the values achievable with pre-existing patents. This is due to the possibility of magnetically bonding to water substances which are not soluble in the same, such as hydrocarbon-base liquids. The latter are entirely decomposed by the arc as well as by the high temperature of the plasma in its surroundings, resulting in a higher energy content of the gas produced. It is evident that this feature too is not possible for pre-existing patents.

The fourth main novelty of this invention is that magneliquids permit additives, such as Carbon and other substances magnetically bonded to water, which increase the conductivity of the magneliquid at least by a factor of five. In turn, said increase of the conductivity evidently permits bigger values of voltages in the arc. Still in turn, higher arc voltages imply longer arc gaps which evidently increase gas production, as established by several tests. This additional feature is also not possible for pre-existing patents, because the latter can only increase the conductivity of the base liquids via solutions, with consequential increase of electrolysis and related dangers. By comparison, this invention permits the addition to the base liquid of the highly conducting carbon in a magnetic bond to the water molecules, resulting in a process which is not electrolytic. A virtually endless number of magneliquids are possible. A few preferred magneliquids for each of the above indicated novelties are identified later on in the preferred embodiment. Similarly, a virtually endless number of geometries are possible via the use of permanent magnets or electromagnets for the joint and/or individual magnetic polarization of water, carbon-base molecules, conductivity-increasing, and energy-enhancing substances, as later described in the preferred embodiment.

The fifth main novelty of this invention over pre-existing patents is that the combustible gas produced is itself new. In addition to major differences in chemical composition with pre-existing gases identified below, said gas is mainly composed by magnecules (Figures 6 to 10). The combustible gas produced by this invention is therefore called magnegas. Numerous different compositions of magnegases are possible with various magnetically polarized atoms and molecules, depending on the selected magneliquid, the selected electrodes and other factors. Representative magnegases are indicated in the preferred embodiment described below.

The sixth main novelty of this invention over pre-existing patents is the elimination of Carbon rods as electrodes and the use of high temperature resistant materials which do not necessarily release carbon under an electric arc. More specifically, extensive experimentation has established that, under a DC arc powered by 15 KW anodes composed by a tungsten rod of about 3/4ö diameter and 2ö length experience minimal consumption, with replacement needed over at least one month of operation. By comparison, under the same DC arc powered by 15 Kw, cathodes are exposed to much greater electro-mechanical solicitations and temperatures, thus experiencing a greater wear as compared to the anodes. The same experimentation has established that a cathode made up of conducting ceramics of about 3/4 inch in diameter and about 1 foot length lasts for at least 4 hours of continuous operations, thus requiring two services per day, one in conjunction with lunch break, and the other at the end of the working day. Numerous additional materials are possible for the electrodes, each in a variety of different configurations described below in the preferred embodiment.

The seventh main novelty of this invention over pre-existing patents is the removal of the plasma from the arc via the flow of the magneliquid thru the arc itself via a pump that continuously circulates the magneliquid. Under sufficient speed, said flow evidently displaces the plasma immediately following its formation. This new process implies that the arc continuously generate new plasma, rather than being stationary within the same plasma and augmenting it.

The eight main novelty of this invention is that the flow of the magneliquid thru the arc evidently cools the electrodes, thus permitting a large increase of their life. Note that, since the plasma created by the arc has about 7,000 F, said cooling remains effective even when the magneliquid has reached its boiling temperature. Note also that this cooling cannot be applied to equipment as per existing patents. As recalled earlier, their process is based on bringing the tip of the carbon cathode to incandescence which is necessary to expel carbon atoms and to carry them into the plasma. In turn, the presence of carbon in the plasma is necessary to create CO and avoid an otherwise explosive mixture of sole hydrogen and oxygen gases. It is evident that, when cooled via a liquid flow, the carbon cathodes of pre-existing patents cannot become incandescent and, therefore, they cannot emit carbon, by consequently producing an explosive mixture of H and O gases. Numerous configurations of magneliquid flow thru the arc are evidently possible as outlined below in the preferred embodiment. They can be classified depending on the objective at hand, such as: 1) In the event high efficiency in the production of magnegas is desired, then the geometry of the configuration should be such to maximize the flow of the magneliquid thru the arc while minimizing turbulences; 2) In the event one wishes to use the technology to sterilize biologically contaminated liquids, such as town sewage, while producing magnegas, then the liquid should be forced thru a venturi surrounding the arc; 3) In the event the maximization of the heat produced in the magneliquid is desired, then still different geometries are desirable.

The ninth novelty of this invention is the increased efficiency over that of pre-existing patents, which is of two-fold nature. First, there is a large increase of the efficiency in the production of a combustible gas for the same electric energy. In fact, numerous measurements have established that, by operating the equipment at atmospheric pressure, the energy in the combustible gas produced is at least two times the electric energy used for its production when measured at the panel, with bigger efficiencies expected in the operation of the equipment at higher pressures,, higher voltages and higher flow. Second, the magneliquid used for the production of the combustible gas, when flowing through the electric arc, is subjected to a number of reactions at the particle, nuclear, and molecular level which increase dramatically its temperature, with a production of heat at least three time the electric energy used. In summary, numerous measurements which can be repeated everywhere to any interested examiner have established that, when the equipment operates at atmospheric pressure, one unit of electric energy measured at the panel produced at least five units of energy, two in the gas and three in the heat, with bigger efficiencies expected at higher pressures. The above occurrence is fully compatible with the principle of conservation of the energy. In fact, the main feature of the equipment of this invention is that of being capable of tapping energy in liquid molecules, in essentially the same way as nuclear reactors can tap energy from nuclei.These results are a confirmation of the in depth theoretical studies conducted by the inventor at the particle, nuclear and atomic levels, here omitted for brevity. Most importantly for the environment, the removal of the plasma from the arc dramatically reduces the recombination of H and O atoms into water, thus increasing the volume of gas produced, and decreasing the dissipation of electric energy into heat, with consequential increase of the efficiency.

The tenth main novelty of this invention is the automatic mechanism originating, controlling, and optimizing the arc, which is essentially based on: 1) The indicated addition to the magneliquid via magnetic bonds of carbon or other substances increasing the conductivity of the magneliquid and the length of the arc gap; 2) The automatic control of the arc gap via electro-mechanical means capable of maintaining said voltage essentially constant; and 3) means to optimize said voltage, thus permitting the maximization of the gap and the consequential maximization of the magnegas produced per each Kw of power. Virtually endless realizations and variations of the above main principles of the automatic arc controlling mechanism are evidently possible. A representative version is outlined in the preferred embodiment presented below.

All the above features imply a new process for the production via an electric arc of the new magnegas plus the production of heat in the magneliquid. As established by extensive tests, the novel environmental and financial advantages of the magnegas over pre-existing fuels and patents are dramatic, as summarized below.

As it is well known, fossil fuels are altering Earth's atmosphere in a truly serious manner due to their excessive consumption by the daily use of about five hundred millions cars, about one million trucks, and about one hundred thousand planes. The three major environmental problems resulting from such extreme uses of fossil fuels are, in the order of their damages to humans and the environment:

1) Fossil fuels emit in their combustion exhausts some of the most carcinogenic substances on Hearth, which are inhaled by humans in amounts that are a large multiple of the carcinogenic substances contained in chemically manipulated foods.

2) Fossil fuels are depleting the oxygen content of our atmosphere due to the oxygen consumption in such extreme volumes which cannot be regenerated by plants and forest, not only because the latter were not design by nature to produce the indicated large volume of oxygen, but also because the forest themselves are being rapidly depleted.

3) Fossil fuels contain an excessive amount of carbon dioxide in their combustion exhausts, which is the primary cause of the well known green house effect in our planets, whose evidence is established beyond credible doubt by dramatic climactic changes and large devastations, such as the recent record in the U.S.A. of 176 devastating tornados in the month of January 1999 alone, tornadoes which should generally occur during spring, summer and fall.

Magnegas resolves all the above three catastrophic environmental problems caused by fossil fuels at a cost which is competitive with respect to currently used fuels, thus being acceptable by contemporary societies. The resolution of said catastrophic environmental problems at a competitive fuel price was the main drive for this inventor to conduct the decades of research needed for this invention. I outline below, first, the resolution of said catastrophic environmental problems, and, then the means permitting its achievements at costs competitive with those of existing fuels.

The eleventh novelty of this invention is that magnegas possesses in its combustion exhausts the lowest percentage of carcinogenic substances, the highest percentage of oxygen and the lowest percentage of carbon dioxide among all fossil fuels of current use.

According to extensive tests and measurements, magnegas emits in the combustion exhausts: I) Carcinogenic substances in percentages at least 10,000 times smaller than that of fossil fuels; II) A percentage of pure oxygen which has been measured up to 15.1 percent as compared to less than 1 percent oxygen existing in fossil fuels exhausts; and ill) carbon dioxide of the order of 3 percent to 4 percent white the combustion exhaust of gasoline contain about 12 percent of carbon dioxide, those of natural gas contain about 8 percent of carbon dioxide, and similarly high percentages occur for other fuels.

In summary, magnegas is the only known fuel which could sustain life with its combustion exhausts due to its high content of oxygen and the absence of appreciable pollutants. These results should be expected under an efficient process because magnegas originates from water and carbon which are the elements of life.

The twelfth main novelty of this invention is that the cost of production of magnegas is competitive to that of fossil fuels. This important prerequisite for the practical use of magnegas as a combustible fuel is due to a variety of factors which include increased efficiency of the process, improved energy content as well as the capability of the basic process of this invention for the income producing recycling of non-radioactive liquid wastes while producing income producing magnegas, water usable for irrigation, and solid precipitates usable for fertilizers.

The thirteen main novelty of this invention over pre-existing patents is that the flow of magneliquids thru the arc permits a dramatic improvement of rapidity in the recycling of non-radioactive liquid waste.

As it is well known since some time, the electric arc is an excellent means for recycling liquid waste, because the arc decomposes said waste into a plasma of mostly ionized atoms at very high temperature. Various processes then occur at the particle, nuclear and atomic levels here omitted for brevity, which cause said plasma to divide itself into volatile components constituting magnegas, plus heavy components that precipitate to the bottom of the equipment, where they can be collected and sold as chemicals useful for fertilizers.

Extensive tests conducted have established that the equipment of existing patents for recycling liquid wastes via an electric arc have an extremely low efficiency because the recycling area, that surrounding the arc, is small as compared to the rest of the liquid. This evidently requires long periods of times until the entire liquid waste is eventually exposed directly to the arc, with erratic results and very low efficiency. On the contrary, the forced flowing of the liquid waste through the electric arc via a pump or other means, rapidly exposes the entire liquid to said arc, thus permitting a dramatic improvement in the recycling itself.

Moreover, extensive tests have established that all the water passing thru an electric arc as in pre-existing patents is dangerous to humans and to the environment because the orbits of the atomic electrons of said water have been deformed by the intense magnetic fields of the arc. The water molecule then assumes a configuration different than the natural one due to the strong magnetic polarization, with a chemical structure called plexicules, that is, magnecules constituted by the same polarized molecules. The same tests have established that said water is so damaging to the environment, that bacteria cannot reproduce themselves in it, and die.

The fourteenth main novelty of this invention is the magnetic degaussing of the water resulting from said recycling of non-radioactive liquid wastes via the use of microwaves, generally those with the resonating frequencies of the water and the other substances recycled.

Tests have established that said magnetically polarization of the orbits of the water molecules can be removed via the use of microwaves with the resonating frequencies of water and the same holds for the case of other substances. In fact, the resonating microwaves essentially force the water molecules to rapidly oscillate, by therefore resuming its ordinary configuration.

It follows that, while the water resulting from the recycling of liquid waste via pre-existing patents is damaging to humans and to the environment, the water resulting from the recycling process of this invention, even though generally not of drinking quality, it is nevertheless excellent for irrigation because returned to its natural configuration while being rich in residual fertilizing chemicals.

In order to understand the competitiveness of magnegas with respect to current fuels, it is important to consider the income and cost for the new recycling of non-radioactive liquid waste according to this invention. Extensive measurements have established that the arc served by a 50 KW power unit can recycle liquid sewage as originating from households and municipalities at the rate of 25 gallons per minute when pumped thru a venturisurrounding said arc. This corresponds to the recycling of 1,500 gallons of liquid sewage per hour, and 12,000 gallons per day with 8 working hours. During this process there is the complete elimination of all bacteriological activities, as established by analytic measurements at independent laboratories, and as expected in any case from the very high electric current, the very intense light, and the very high temperature of the arc region.

By assuming that electricity costs about $0.08 per KW, 50 KW cost $4.00 for the recycling of 1,500 gallons of liquid waste, or $32.00 for the recycling of 12,000 gallons, which yields the cost of recycling said waste of about $0.0027 per gallon. As one can see, such a cost is already competitive over costs currently paid by town and municipalities for recycling liquid sewage, thus implying that the entire cost of operating the equipment, including electricity as well as personnel and maintenance, can be assumed to be paid by the recycling of said liquid sewage.

At the same time, the recycling equipment of this invention, when served by a 50 KW power unit, can produce: A) 1,500 gallons per hour, or 12,000 gallons per 8 hours working day of water useful for irrigation, which can be sold at $0.0003 per gallon yielding an income of $0.30 per hour or $2.40 per day of 8 working hours; B) About 5 pounds of solid deposits per hour which can be sold at an income of $0.50 per hours, or $4.00 per day of 8 working hours, and C) about 300 cubic feet of magnegas per hour corresponding to 2,400 cubic feet per day of 8 working hours, which are essentially cost free.

To have an idea of the possible usage of the above results, extensive tests have established that an automobile of about 100 HP consumes about 10 cf of magnegas per minute, or 600 cf per hour. The production of 2,400 cf of magnegas as a byproduct of the above recycling of liquid sewage therefore permits to run said automobile for about 4 hours, which are amply sufficient for daily commuting time.

The point important for this invention is that the magnegas produced via the above recycling of liquid sewage for said commuter usage has no appreciable cost, besides those for storage and transportation. Therefore, the novel recycling of liquid sewage of this invention is useful, not only for industrial, but also for consumer applications.

Actual negative costs of magnegas can be obtained via the recycling of other non-radioactive liquid wastes, such as: paint sludge; bilge water; refinery pit oils; oil spills; processing oils; anti-freeze used in automotive radiators; oils used in engines; solvent contaminated waters; and other liquid waste. Even though generally not solvable in water, all the above liquid wastes can be recycled with the new process of this invention because said liquid waste can be magnetically bonded to water, by therefore permitting its decomposition when exposed to the electric arc, with consequential recycling into non-pollutant substances.

To see the actually negative cost of magnegas, note that the recycling of the above listed non-radioactive liquid waste generally costs from $50.00 to $5,000.00 per drum, depending on the gravity of the contaminants. By assuming a minimum income of $0.50 per gallon comprising half a gallon of waste and half a gallon of water, less the cost $4.00 for 8 hours use of 50 KW, less the cost of $160.00 per day of 8 working hours due to personnel and service, the recycling of 1,500 gallon per day would imply the income of $750.00 day for the recycling, plus the income of $2.00 per day for irrigation water, plus the income of $4.00 per day for chemical useful for fertilizers, less the indicated costs. This implies the negative cost of $692.00 for the production of 2,400 cf of magnegas, less the amortization of the equipment and other conventional expenditures after which, in any case, the cost of the magnegas produced remains negative, yet permitting the use of an automobile with about 100 HP for about 4 hours by burning a fuel whose exhausts contain no appreciable carcinogenic substances, the lowest content of carbon dioxide among all fuels of current use, and an oxygen percentage so high to be capable of sustaining life.

## DESCRIPTION OF PREFERRED EMBODIMENT

The preferred embodiments hereinafter described relates to a mobile equipment for the production of magnegas with a power unit of about 50 KW DC, such as that by Miller Corporation, a leading manufacturer of arc welders with international headquarters located in Appleton, Wisconsin, commercially sold under the name of Summit Arc 1,000,requiring 53 KW of AC real power at 450 V, 3-phase, 60 Heatz, and delivers an arc for 100 percent duty cycle with 44 V DC and 1,000 A. Whenever electric power is not available, the power unit can be evidently provided by a diesel powered electric generator with essentially the same characteristics as that of the Miller Summit Arc 1,000. Said main power characteristics can be evidently scaled up or down as per requested application and market.

The preferred equipment is mobile in the sense that it is entirely contained in a trailer or other platform equipped with wheels for its easy transportation to the desired location. In fact, a primary feature of this invention is that of abandoning the current industrial trend of producing combustible fuels in a main plant, then storing and then transporting them where needed. Due to the easiness of its production, magnegas can instead be produced anywhere desired, thus eliminating the costly storage and transportation needed for the delivery of the fuels where needed.

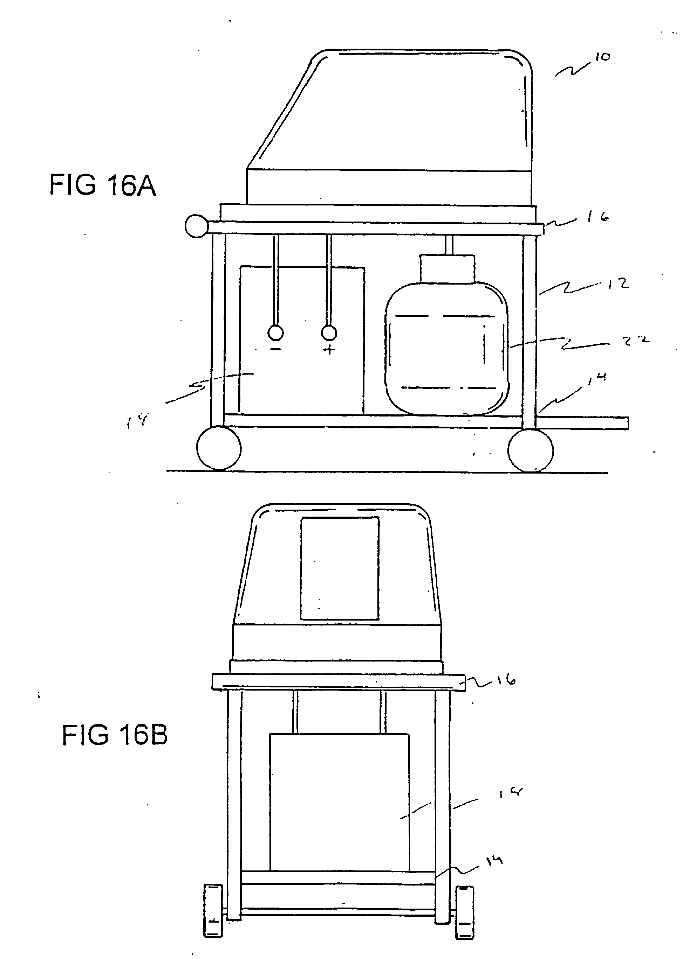

With reference to Figure 16, the exterior appearance of the equipment is that of a two levels wheeled trailer of the approximate total size of 4 ft. x 6 ft. x 6 ft. The upper portion of the trailer contains the magnegas production unit and related controls, while the lower portion of said trailer contains the power unit as described above and a commercially available storage tank hereon assumed to include a pump to reach the necessary internal storage pressure.

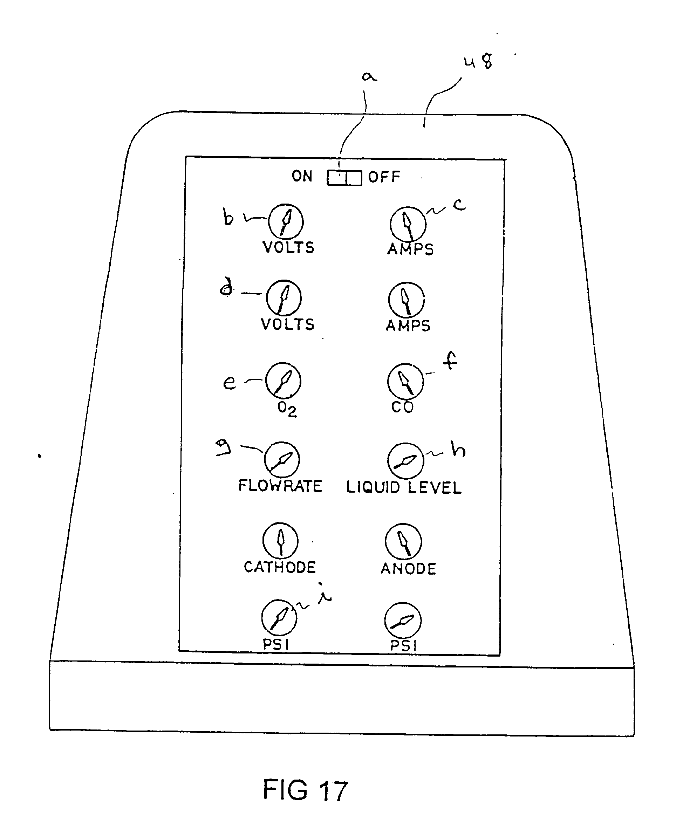

Figure 17 depicts a typical control panel in the magnegas production unit which comprises: on-off main switch; controls for the arc DC voltage and amperage; gauges for the measurement of said voltage and amperage; a gauge of the Oxygen content of magnegas with automatic halting of the operation in the even t it reaches a pre-determined level, usually set at 12 percent; a gauge for the detection of CO in the immediate exterior of the equipment in the event of leaks, with automatic halting of the operation for exterior detection of CO usually set at 0.02 percent; a meter of the flow/volume of magnegas produced per minute; a gauge of the level of the magneliquid producing the magnegas, with automatic arrest of production when said liquid is below a pre-set level usually of 1/2 inch below the original level; meter monitoring the consumption of the individual electrodes with automatic halting of the operations upon their individual consumption; gauges measuring the pressure of magnegas in the production vessel and, separately, in its storage tank; and other gauges.

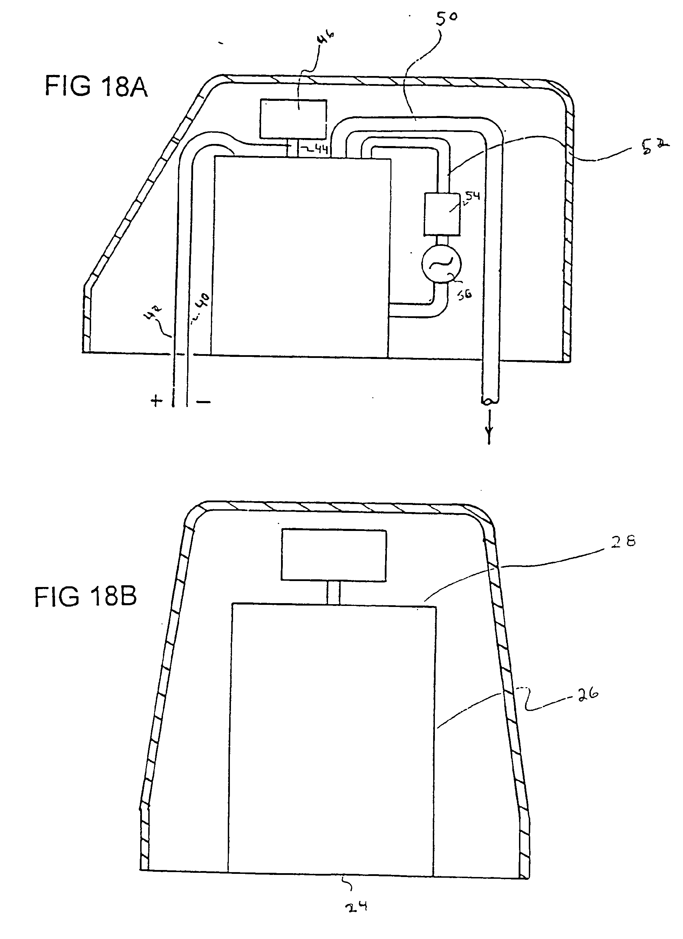

With reference to Figure 18, the magnegas production unit in the upper level of the equipment consists of an all enclosing cover made up of an insulating material such as fiberglass with general thickness of the order of 1/8 inch, in whose interior there are: the magnegas production vessel; electrical connections to the power unit below, pipes for the deliver of the magnegas produced to the tank below; a pump for the flow of the magneliquid thru the arc; equipment for the magnetic polarization of the base liquid; the automatic mechanism for the creation, maintenance and optimization of the arc; and other equipment.

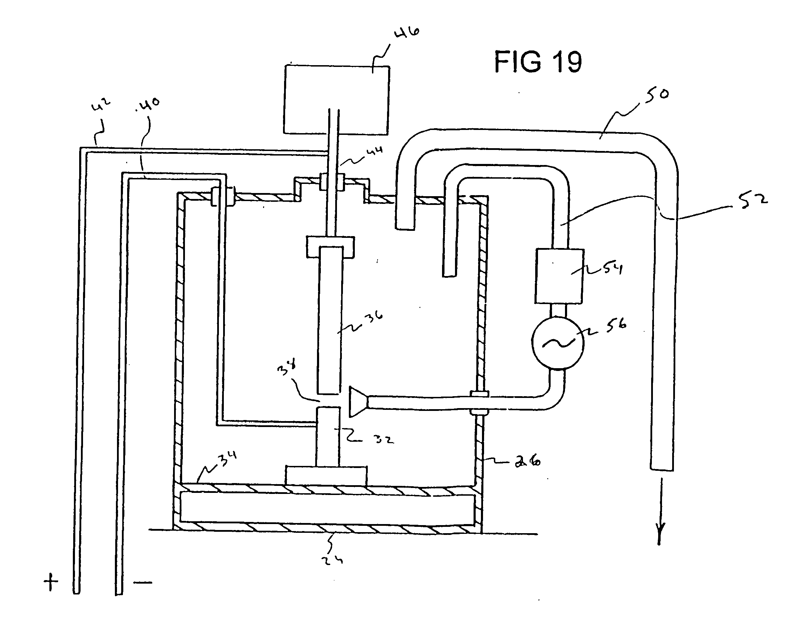

Figure 19 provides a sectional view of the magnegas production unit itself which comprises: an all enclosing reactor vessel fabricated by metal of approximately 1/4 inch thickness and approximately 3-1/2 feet wide, 4 feet iong and 2 feet high; the magneliquid more particularly described below, which mostly fills up up said vessel, except for a empty layer at the top generally of the order of 1/4 inch; the simplest possible realization of the arc consisting of a stationary anode composed by a tungsten rod of 3/4 inch diameter and 3 inch length which is vertically placed at the bottom of said metal vessel, and electrically insulated to the same; a cathode of 3/4 inch thickness and 1 foot length composed by thoriated tungsten, glassy carbon, conducting ceramics, or other high temperature conductors, placed vertically head-wide against said anode; the automatic arc mechanism more appropriately described below, which initiates the arc by moving downward the cathode to contact with the anode, and subsequently retracts to the arc gap of about 1/32 inch, maintenance of the arc by keeping approximately constant its voltage via electro-mechanical means, and by optimizing said voltage via its variation as per gauge in the control panel; the flow of the magneliquid thru the arc very simply realized by a tube of approximately 1/2 inch thickness terminating in a beak at least 1/4 inch wide and 1/4 inch thick, which tube is placed perpendicular to the cylindrical symmetry of the electrodes at the arc level in such a way that its 1/2 inch x 1/4 inch terminal beak is also placed vertically to invests not only the arc, but also at least 1/4 inch of the tips of the electrodes; an outside pump circulating the magneliquid thru said arc; means for the magnetic polarization of the magneliquid more appropriately described below; sensors for other controls and other items.

As shown in Figures 17, 18 and 19, the system 10 is for the production of a combustible gas from an electric arc submerged in a magnetic polarized liquid. The system comprises a support assembly 12. Such assembly has a first or lower support surface 14 and a second or upper support surface 16. A source of potential 18 is positioned on the first support surface.

Next provided is a gas production unit 22. Such unit is supported on the second support surface. Th gas production unit has a base 24, an upstanding side wall 26 and an upper cover plate 28. A non-consumable anode 32 is supported in the gas production unit by the lower surface with an insulating base 34 between the lower supporting surface and the anode. A consumable cathode 36 is also located within the gas production unit and supported from above. The relationship is to create a space 38 between the anode and the cathode.

Electrical line 40, 42 couple the source of potential and the anode and the cathode respectively. A cathode supporting shaft 44 of an electrically conducting material extends through the cover plate. A holder 44 for the cathode is supported there beneath. A drive member 46 is also provided to move the cathode toward the anode during operation and use. Automatic controls 48 are located there above for monitoring and controlling the system during operation and use.

A first line 50 couples the cover plate with the pressure tank. This is for the passage of gas produced in the production unit. Such line couples to the pressure tank for storage of the gas.

A second fluid line 52 couples the cover of the gas production unit and the space between the anode and the cathode. Such second line includes a pump 54 and a magnetic polarization unit 56 to magnetically polarize the liquid circulating therethrough. The pumped fluid cools the arc during operation and use.

As can be see in the Figures, the anode is preferably fabricated of tungsten, a non-consumable electrode. The cathode is preferably fabricated of a consumable material such as thoriated tungsten, glassy carbon conductive ceramic material.

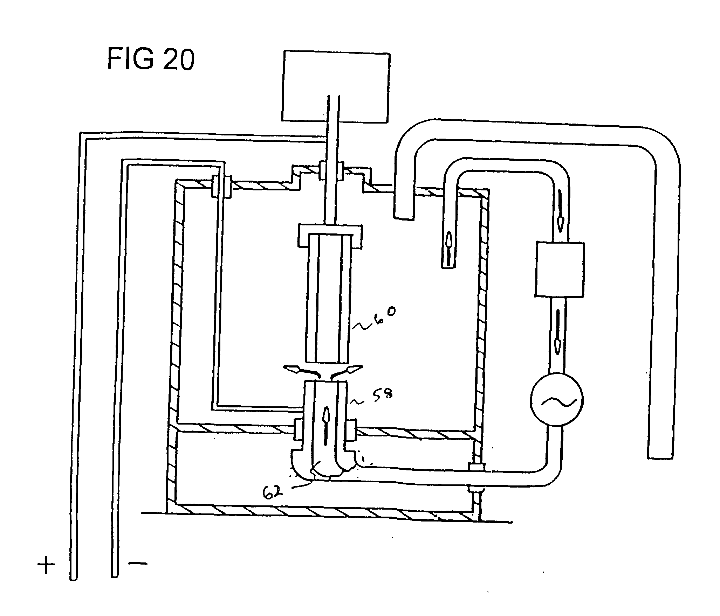

Figure 20 describes essentially the same automatic arc system as that of Figure 19, although with an improved flow of the magneliquid which an anode composed by a hollow type of Tungsten of about 1 inch OD and 1/2 inch ID thru which the magneliquid is forced to flow toward the arc, with the cathode given by a tube of the same OD and ID as that of the anode to avoid uneven wears, although said cathode has no necessary internal flow of the magneliquid.

The embodiment of Figure 20 is similar to that described above but the anode 58 and the cathode 60 are both formed of a hollow tubular configuration. They have a common interior diameter and a common exterior diameter. They are spaced from each other along a common axis. In this manner, the output from the pump feeds the magnetic polarized fluid up through the center 62 of the anode and outwardly therefrom into the space between the anode and the cathode for cooling purposes.

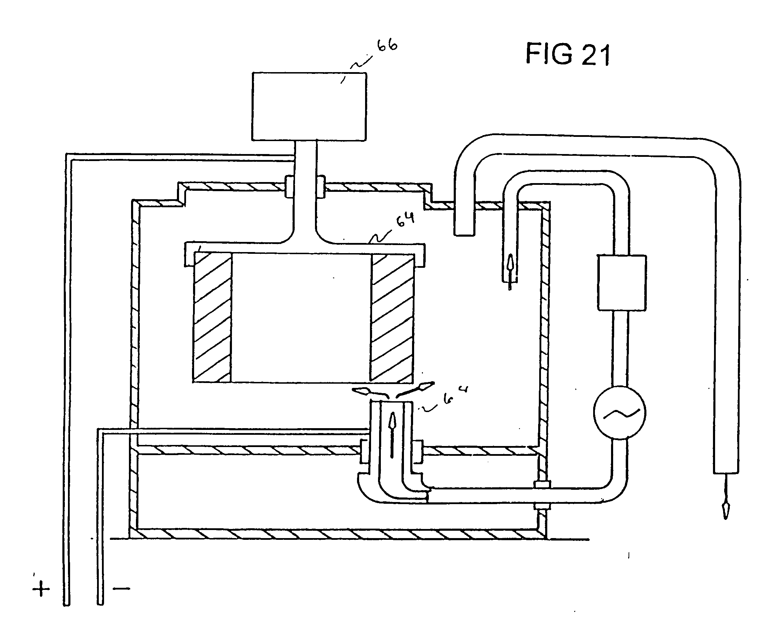

Figure 21 depicts an arc system possessing a dramatically longer life as compared to those of Figures 19 and 20, which comprises the same long life hollow tungsten anode as that of the preceding Figure 20 with internal flow of the magneliquid toward the arc served by an outside pump, plus a cathode composed by thoriated tungsten, glassy carbon, or conducting ceramics in the shape of a cylinder of approximately 1 inch thickness, 6 inch radius and 1 foot in length, which is caused to rotate vertically head-wise against the edge of said anode, as well as to advance and retract as requested by the initiation of the arc, its maintenance and optimization. Depending on the selected material, the size and the cooling flow, the cathode of the above cylindrical configuration can have the same life long of the anode.

The embodiment of Figure 21 is also similar to the embodiments above, but the cathode 64 is formed as a large hollow tube having a common wall diameter. A motor 66 functions to rotate the cathode during operation and use. The anode 68 is formed as a small hollow tube receiving the output from the pump for movement of the fluid therethrough to the space between the anode and cathode for cooling. The exterior diameter of the anode is essentially equal to the wall thickness of the cathode.

Figure 17 illustrates the preferred congrols for any of the above systems. Such controls include (a) a main off-on swich, (b) a voltage control, (c) an amp control, (d) a voltmeter, (e) an 02 safety gauge for gas, (f) a CO2 safety gauge for environment, (g) a flow meter of magnegas, (h) a gauge for liquid line, (i) a gauge of psi in bottle.

As described earlier, the magneliquid of this invention is composed by a base liquid rich in H and O, plus the addition of specially selected substances to increase the energy content of the magnegas produced, and to increase the volume of said gas via the addition of suitably selected acids or other substances which increase the conductivity of the original liquid.

A representative case of base liquid is given by any form of water readiiy available on Earth, such as: tap water, sea water, lake water, well water, etc., or any nonradioactive liquid waste to be recycled, the latter being more appropriately described below. Representative example of additives are given by: coal in powder form which is then subjected to magnetically bonded to the base liquid, resulting in a new form of gasification; hydrocarbons in liquid forms and other substances that are not generally solvable in water; other substances that are solvable in water and have a high carbon content, such as ethylene glycol, anti-freeze, sugar and their derivatives. A virtually endless number of surfactants can also be added to achieve a better mixture of solution and magnetic bond, such as up to 30 percent of C12-H10-O2 with up to 10 percent of Na-O-H. Finally, preferred additives to increase the conductivity of the magneliquid are acids solely constituted by H, O, and C, such as acetic acid.

Representative total volumes of magneliquids in thge above recyclers are 20 gallons which can produce 360,000 gallons of magnegas at ordinary pressure and temperature, plus a large amounmt of heat in the magneliquid which can be utilized via conventional heat exchangers. Needless to say, the preferred embodiment contains means for periodical re-filling of the magneliquid to the originally selected volume and composition.

An additional embodiment is that in which electrodes of approximately 3/4" in diameter penetrate within a heat resistent tube, called venturi, of approximately 1" internal diameter, 3" outside diameter and 3' in length, in such a way that the electric arc occurs in the approximate center of the internal diameter. The magneliquid to be recycled is then forced to pass through such a venturi with essentially the same pump system as described above. Forcing the magneliquid through the venturi essentially guarantees a much bigger efficiency in the recycling of the liquid waste as compared to the flow of the same liquid in an open fashion around the electrodes, as well as the production of a magnegas of better quality.

Yet another embodiment is the one in which the preceding embodiment with the venturi is sued for the recycling of liquid sewage from town or municipalities. In this case the complete recycler comprises: Station 1, comprising a macerator pump; Station 2 comprising means to measure the flow of the sewage, such as a flowmeter; station 3, comprising one or more recyclers with venturi as above described each powered by a 50 Kwh DC power source with 3/4" electrodes, each having an independent or a common automatic feeder, the recyclers being connected in series with individual bypasses for individual servicing without disconnecting the recycling; Station 4, comprising magnegas collection stations, one per each electric arc; Station 5, comprising a degaussing equipment for the removal of the magnetic polarization of the liquid; Station 6, comprising a centrifuge for the removal of solid in the recycled liquid; Station 7, comprising a final filtering station.

In the latter embodiment, when passing through the venturi operated by a 50 Kwh electric generator with 1000 A and 40 V, the liquid sewage is exposed to the immediate vicinity of: the 7000 degrees F of the electric arc; the very high electric current; the very intense light created by the arc; plus the related very strong electric and magnetic fields. All these exposures imply the instantaneous elimination of all bacteria in the liquid, which therefore remain bacteriologically pure, yet very rich in nutrients for irrigation, and actually qualifying for the irrigation of organic farm products. This equipment has the recycling capacity of 2,500 gallons of city sewage per hour under recycling stations of 50 Kwh each. Several such recycling stations can be put in series to increase the quality of the recycled liquid, and/or they can be put in parallel to increase the volume of recycled liquid per hour.

Yet another preferred embodiment is that in which the anode is composed by coal, rather than carbon, first turned into a powder form, and then compressed or bonded into rods of 3/4" in diameter and 2' length, with interlocking means, such as a thread, for continuous use. The coal in the anode is then decomposed by the electric arc into its molecular and then atomic constituents, and then recombine thanks to the flow technology of this invention. The process then produces a new method for coal gasification producing a combustible gas whose chemical composition is constituted by the volatile elements of the coal plus the volatile elements of the liquid, while all other ingredients p[precipitate as solid at the bottom of the recycler, where they can be periodically removed.

Still another embodiment is one in which the vessel described above is equipped with means for the extrusion of the anode at the speed of its consumption to keep constant the electric arc voltage these extrusion means can be essentially composed by the selected base elements, such as graphite, coal, or other, a bonding element, such as tar, epoxy, or other, and bonding means, such as temperature, which are combined together into a screw powered by an electric motor at a speed controlled by the automatic controller of the arc described below, which extrudes the composed anode in the outside diameter of 3/4" in the desired length, and at the desired speed. An advantage of the latter means being the continuous capability of working without any interruptions except for service. Another advantage is the completely automatization of the new coal gasification process described in the preceding embodiment.

Means for the creation of the magneliquid from the above identified substances are rather diversified because they depend on the substance selected and their scope. Said means can be classified into:

1) Creation of magneliquid prior to the initiation of the production of magnegas. Depending on the substance which is intended for magnetic bonding to the water, this phase may require:

1.1: The magnetic polarization of the water alone, and the subsequent addition of said substance in a magnetically un-polarized form;

1.2: The magnetic polarization of the substance alone and its addition to a magnetically polarized water:

1.3: The magnetic polarization of both the water and the desired substance, either jointly after mixing or separately prior to mixing.

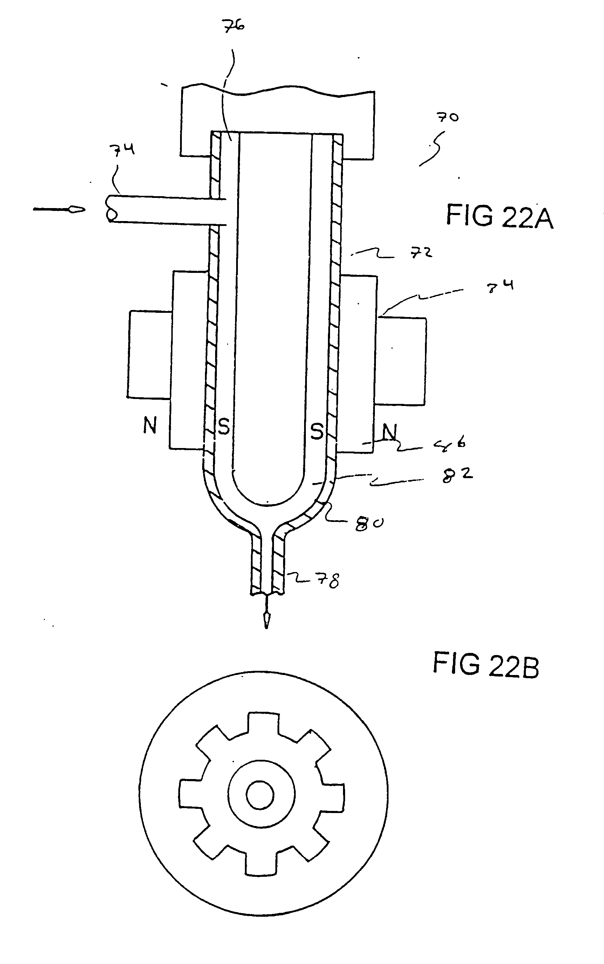

The above magnetic polarizations can be achieved via a virtually endless number of magnet configurations, each admitting different magnetic polarities. Figure 22 depicts an embodiment consisting of eight rare earth permanent magnets of 1/2 inch x 1 inch x 3 inch each having a magnetic field of approximately 40,000 G with polarization on the sides which are placed along a non-conducting cylinder of approximately 3 inch OD and 2-3/4inch Into create an internal radial field of the same magnetic polarity. An additional internal cylinder creates a cylindrical passage of the liquid about 1/8 inch thick in the immediate proximity of said permanent magnets. The liquid to be magnetically polarized is forced to move in between said two cylinders, thus being the maximal possible proximity of said permanent magnets, by therefore acquiring the indicated magnetic polarization. This particular embodiment is served by the same pump as that used for the flow of the magneliquid.

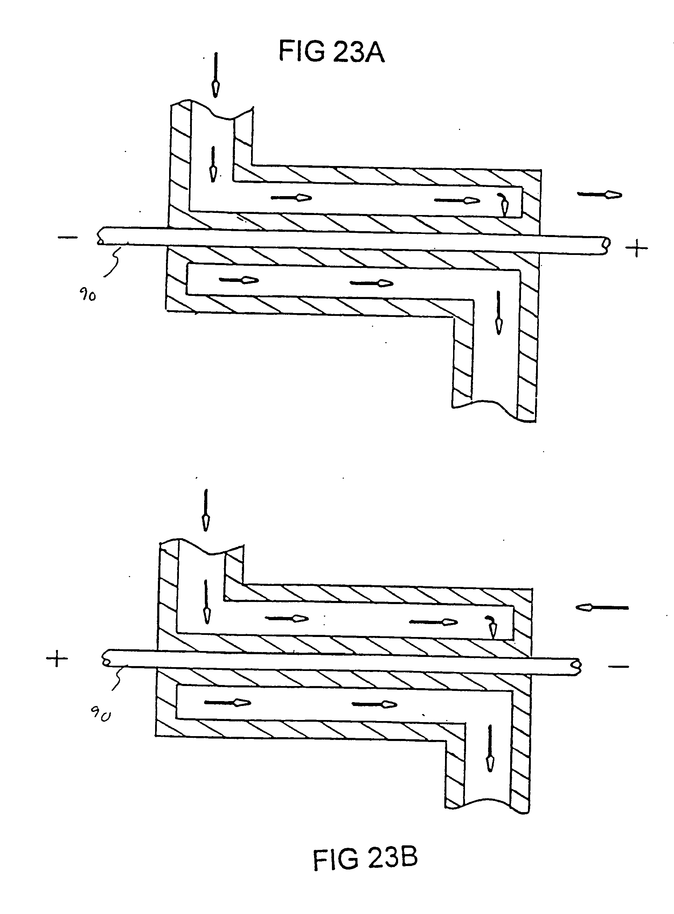

The assembly 70 as shown in Figures 22 and 23 is for magnetically polarizing water with electrically conductive carbon particles in suspension therewith. Such assembly includes a generally cylindrical outer container 72 in a tubular configuration. Such container has an inlet opening 74 adjacent to the first end 76 for the input of liquid to be magnetically polarized. Such container also has an outlet opening 78 at the second end 80 for the discharge of the liquid. An interior inner insert 82 is in a generally cylindrical configuration. It has an exterior diameter less than the interior diameter of the outer container. In addition, mechanisms 84 are provided to effect a magnetic field between the outer container and the inner insert. In this manner the passage of a liquid formed of water with suspended magnetizable particles between the input and the outlet openings will effect the magnetic polarization of the liquid. In the preferred embodiment, the mechanisms include a plurality of magnets 86 spaced around the periphery of the outer container. Spaced holders 88 are located between the magnets. The inner and outer containers are fabricated of a diamagnetic material.

Figure 23 depicts another configuration for the magnetic polarization of the magneliquid which essentially consists in utilizing the very high electric current that passes thru the conductors serving the arc, and by letting the liquid to flow in a nonconducting tube placed in their immediate exterior of bout 1/8 inch thickness and 1/8 inch cylindrical passage for the liquid. This magnetic polarization can be served by the same pump as that used for the flow of the magneliquid thru the arc, or by a different pump.

Figure 23 shows an alternate embodiment. In such embodiment, the inner insert is hollow with a current conducting electric line 90 therethrough. The inner and outer containers are fabricated of a dielectric material.

Numerous additional embodiments for the magnetic polarization of liquids are contained in the Patent Application Number 09/106,170 filed on June 29, 1998, entitled "ElectroMagnetion".

It should be recalled that the main novelty in the magnetic polarization of liquids of this invention over the above quoted Patent Application is the use of the electric arc itself to produce the biggest magnetic polarization of liquids available nowadays, as described earlier in this Patent Application.

To properly describe the preferred embodiment for the automatic feeding and control of the arc of this invention, we first note that the technology which is fully valid for arc in air, is basically inapplicable for arcs within ordinary liquids, let alone magneliquids. For instance:

1) The gaps for arcs in air generally of the large order of 1/2 inch, are dramatically reduced for the creation of an arc within water under the same KWH;

2) The generally high volts of arcs in air, such as 90 V used by plasma cutters in air with 10 KWH, are dramatically reduced for underwater arcs, generally down to 1/3 of the value in air;

3) The various means available for the activation of the arc at a distance when in air are inapplicable for the creation of underwater arcs. For instance, the high frequency Tesla discharges often used for the activation of the arc at a distance in air, are inapplicable underwater, because the dramatically different physical-chemical conditions in the liquid do not permit any high frequency discharge at all.

Extensive tests since early 1998 established that:

i) The arc voltage cannot be controlled via the gap because each arc within each liquid requires its own characteristic voltage per each KW and related gap.

ii) The volume of combustible gas produced per KW increases with the increase of the KW. For instance measurements repeated several times under independent eyewitnesses have established the production via equipment as per pre-existing patents of 24.5 cubic feet of has produced per hours for 13 KW, which yield the Efficiency E = 24.5 cfh / 13 Kwh = 1.86 cf/KW. The same equipment of pre-existing patents with the arc operating under 26 KW produces 70 cfh, which yield the Efficiency E = 70 cfh/26 KWH = 2.69 cf/KW. The same equipment operated with 39 KW produces 150 cf with efficiency increase to E = 150 cf/39 KW = 3.87 Cf/KW. While the KW double and triple, the efficiency increases in correspondence 2.69 cf/KW = 145% of 1.86 cf/KW, and 3.87 cf/KW = 145% of 2.69 cf/KW, thus confirming an increase of the efficiency which is proportional to the KW. Note that the arc voltage in the sequence of the above three tests is: 35 V DC, 53 V DC and 62 V DC.

iii) The characteristic arc voltage per each given power source varies with the variation of the absorbed KW, the chemical composition of the adopted liquid, the nature of the electrodes, and other factors.

In view and consideration of the above features, it is evident that the most efficient automation of the arc feeding mechanism is that based on the optimization of the voltage of the arc per each given value of the KW and per each given chemical composition of the magneliquid.

The preferred remotely controlled automation of arc mechanism is therefore that which identifies the gap corresponding to the biggest possible voltage, and said highest possible voltage can be adjusted for different KW and different liquids.

A typical remotely controlled production of magnegas as per Figure 21 is the following:

STEP 1: Electric power is switched on in the main panel with amperage automatically set at a minimum of about 100 A, while the cylindrical cathode automatically initiate its rotation on the edge of the stationary anode;

STEP 2: The automatic control mechanism advances the cylindrical cathode to the point of initiation of an arc, as identified by the absorption of amperes;

STEP 3: The automatic control mechanism then retracts said cylindrical cathode to the characteristic arc gap, while the amperes are released to reach a pre-set limit, say, of 900 Amperes, thus establishing a regular arc;

STEP 4: The arc gap is controlled by the characteristic DC voltage of 44 V DC;

STEP 5: Whenever the arc voltage increases, the automation moves forward the cylindrical cathode to restore said characteristic gap value and related voltage;

STEP 6: The operator has the capability of optimizing said characteristic arc voltage by setting its value to the maximal volume production of the magnegas, as measured by the flowmeter in the control panel.

STEP 7: The operation of the equipment then continues automatically until the entire consumption of the cathode tube, at which time the remaining part of the carbon cylindrical cathode is retracted, say, of about 1/2 inch, and the equipment is switched off automatically.

As recalled earlier, a fundamental aspect of this invention is that the new magnegas is cost competitive with respect to existing fuels. In turn, such a competitiveness can be reached by using the new process of this invention for the primary duty of recycling non-radioactive liquid waste. In fact, such a recycling implies per se an income. Additional incomes arise from the resulting water usable for irrigation and the solid precipitates usable for fertilizers. Magnegas is then essentially obtained as a byproduct thus resulting to be essentially free, except for storage and other use related charges.

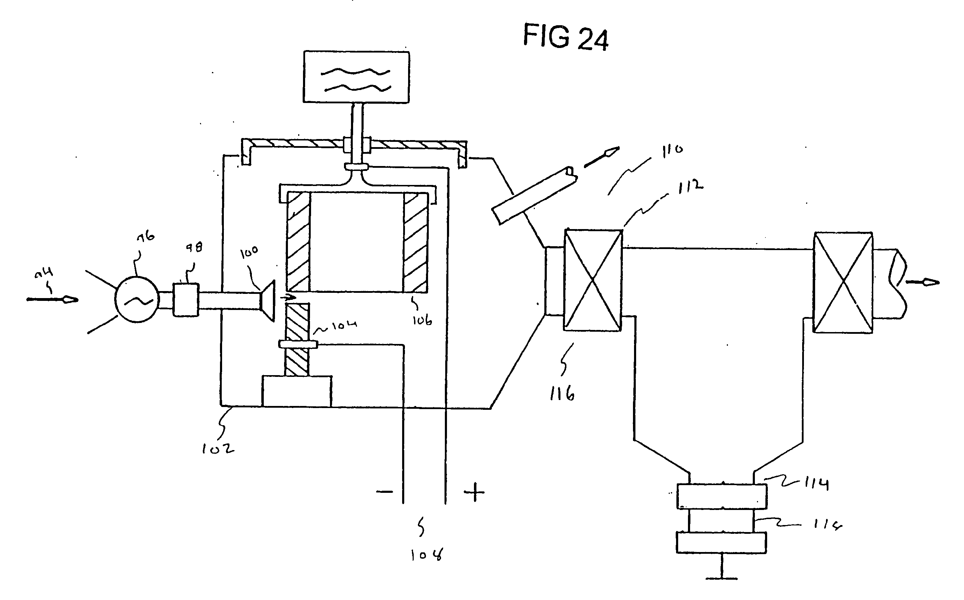

Figure 24 depicts a preferred embodiment for the equipment of this invention used for the recycling of liquid sewage from households or municipalities, which is composed by any desired number of individual stations, each with the following main structure and functions:

I) A DC arc power unit such as the Miller Summit Arc 1,000 described above with 44 V DC and 1,000 A DC. or any equivalent electric generator powered by a diesel engine:

III) A metal vessel in various sections and shapes as described below with about 1ö general thickness to withstand high pressures in which said liquid sewage is made to flow, and comprising in the flow direction: a pump; on-off valve of said flow; a restriction of said vessel down to 1 inch ID and 3 inch length to force the liquid sewage to flow thru the arc; the electric arc station including electrodes placed directly in front of said vessel restriction, rapid means for their replacement, and automatic means for initiating, maintaining and optimizing the arc as in preceding embodiments; the outlet for the magnegas produced: a station for the degaussing of the liquid coming out of the arc consisting of at least six sources of microwaves with resonating water frequency radially disposed outside a restriction of said vessel ot 2 inch in ID and 5 inches in length and emitting their resonating frequency toward the axial center; a chamber with dimension 5 ft. x 5 ft. x 5 ft. for the precipitation of solids to the bottom, with means for their removal at said bottom without halting the operation; a filtering station: and the final outflow of water usable for irrigation.

II) A novel long life arc mechanism specifically designed for recycling liquid sewage in which the anode is composed by a tungsten rod of 1 inch diameter and 5 inch length, and the cathode is a cylinder of 1 inch thickness, 6 inch in radius and 1 foot in length constituted by carbon in graphite form as conventionally used for welding, which is made to rotate head-wise on the edge of said tungsten anode, said arc being controlled by the same automatic mechanism as that previously described, and said cathode being made of Carbon due to the general lack of sufficient carbon in the liquid sewage to be recycled; means for rapidly changing said electrodes; and various controls as per preceding embodiments.

The final machine or system disclosed can be seen in Figure 24. Such system is for the treatment of liquid sewage. Such system comprises a liquid sewage inflow line 94 with a pump 96 in association therewith to effect the feeding therethrough of liquid fluid to be treated. The pump is followed by a shutoff valve 98 and an exit port 100.

A reaction vessel 102 receives the output of the exit port. Such vessel contains an anode 104 and a cathode 106 with a space therebetween. Also included is a source of electrical potential 108 to effect the flow of current across the space between the electrodes which acts to effect an arc. The exit port is located adjacent tot he space between the anode and the cathode to effect the cooling thereof during operation and use.

Lastly, is a solid precipitation chamber 114 with a shut off valve 116 and removable solid container 118. Such container is located between the degaussing station and the filtering station and functions for the receipt of solid waste to be disposed of.

A system for the production of a combustible gas from an electric arc submerged in liquid 124 is provided. A reaction vessel 128 has a base 130. The reaction vessel also has an upstanding side wall 132 provided with an apertured flange 134. The reaction vessel also has a cover plate 136 provided with an apertured flange.

An apertured intermediate support plate 142 is provided between the flanges of the side wall and cover plate. Bolts 144 and associated nuts 146 are provided for the releasable coupling of the support plate between the flanges. The support plate has downwardly extending legs 150. A horizontal selft 152 supports a cylindrical tungsten anode 154. A carbon rod cathode is supported in the vessel and extends through an aperture 160 in the cover plate and sealing bushing 162 in the support plate. Automatic feeding controls 164 are provided to advance sequential carbon rods toward the anode to create a space 166 between the anode and the cathode. A projection 168 is adapted to be fit within a recess 170 of the next adjacent carbon to effect the continuous feeding of carbon rods into the reaction vessel.

A source of electrical potential 174 is next provided. The source of electrical potential has electrical leads 176, 178 separately coupling the source of potential with the anode and with the cathode to generate a gas-producing electrical arc between the anode and cathode.

A first fluid line 180 is provided. The first fluid line is coupled with respect to the vessel and functions to allow the passage of gas produced in the vessel.

A second fluid line 182 is coupled with respect to the vessel. The second fluid line has an outlet orifice 184 adjacent and transverse to the space between the anode and the cathode. A pump 186 feeds liquid to the space between the anode and the cathode for cooling purposes during the application of electrical potential to the anode and the cathode for the creation of combustible gas.

The present invention also includes the gas, the liquid for generating the gas and the method of generating the gas. More specifically, the new and improved combustible gas fabricated by the passage of a magnetized liquid containing water and carbon particles through a submerged electric arc, the gas including hydrogen oxygen and carbon dioxide constituting no more than about 12 percent of the gas. The new and improved magnetized liquid contains water and carbon particles of between about 10 and 15 percent of the liquid and is adapted for use in generating a combustible gas including hydrogen, oxygen and carbon dioxide constituting no more than 12 percent of the gas by the passage of the liquid through a submerged electric arc. Lastly, the new and improved hydrogen, oxygen and no more than 12 percent carbon dioxide includes the steps of forming an electric arc submerged under a liquid, the liquid containing water and carbon particles, magnetizing the liquid, and flowing liquid through the arc for cooling purposes.

## Claims

1. A method for the production of a combustible gas from an electric arc submerged in a liquid containing water and carbon particles, the method comprising the steps of :

- providing a reactor vessel with a liquid and a pair of electrodes supported in the vessel and generating and electric arc ;
- providing an automatic mechanism for controlling and optimising the arc via electro-mechanical means capable of maintaining the voltage essentially constant, and means to optimize said voltage, thus permitting the maximization of the gap between the electrodes, in order to maximize the gas produced ;
- providing a first line communicating with the upper part of the vessel ;
- providing a second line for delivering the liquid to the space between the electrodes ;
- forcedly flowing the liquid, by means of a pump, through the second line and the arc, while
- by means of said mechanism, maintaining the voltage of the arc essentially constant, whereby a combustible gas is produced by the liquid passing through the submerged arc and the flow of liquid cools the
- passing the gas through the first line out of the vessel.

2. The method according to Claim 1, wherein the electric arc occurs between a negatively charged anode (32, 58. 68, 104, 154) composed of a non-consuming tungsten material, and a positively charged cathode (36, 60, 64, 106, 168) composed of a consumable material.

3. The method according to Claim 1, wherein the electric arc occurs between a negatively charged anode and a positively charged cathode, both the anode and the cathode being carbon.

4. The method according to Claim 1, wherein the electric arc occurs between a rod tungsten shaped anode (104) in relative rotational motion head-wise on the edge of a cylindrical shaped carbon cathode (106).

5. The method according to Claim 1, wherein the electric arc occurs between hollow tubular electrodes (58, 60, 64, 68).

6. The method according to Claim 1, wherein said liquid is flown through the electric arc in a direction transverse to a direction of the electric arc.

7. The method according to Claim 1, wherein said liquid is flown through the arc in a direction parallel to an axis of the electrodes.

8. The method according to Claim 1, wherein said liquid is flown through the electric arc by passing through the interior of a hollow electrode.

9. The method according to Claim 1, wherein the liquid flow through the electric arc is controlled so as to minimize the recombination of hydrogen and oxygen into water following its separation, wherein a corresponding increase in the production of combustible gas is obtained.

10. The method according to Claim 1, wherein the produced heat generated by the processing of the liquid is utilized via heat exchangers.

11. The method according to Claim 1, wherein the liquid is one of tap water, well water, lake water, sea water nonradioactive liquid waste, or sewage.

12. The method according to Claim 1, further comprising the step of:

    providing means for processing said liquid into water usable for irrigation, wherein said liquid is liquid sewage from households or municipalities, and wherein said liquid sewage, is recycled into water usable for irrigation, heat and solid precipitates.

13. The method according to Claim 12, further comprising the step of:

    providing a centrifuge for a removal of the precipitates.

14. An equipment for the production of a combustible gas from an electric arc submerged in a liquid containing water and carbon particles, the equipment comprising :

    - a reactor vessel with a liquid and a pair of electrodes supported in the vessel for generating an electric arc ;
    - an automatic mechanism for controlling and optimising the arc via electro-mechanical means capable of maintaining the voltage essentially constant and means to optimize said voltage, thus permitting the maximization of the gap between the electrodes in order to maximise the gap produced;
- a first line communicating with the upper part of the vessel;
- a second line for delivering the liquid to the space between the electrodes, the second line including a pump.

**Patentansprüche**

1. Verfahren zur Erzeugung eines brennbaren Gases aus einem Lichtbogen, der in eine Wasser und Kohlenstoffteilchen enthaltende Flüssigkeit untergetaucht wird, wobei das Verfahren die folgenden Schritte umfasst:

   - Bereitstellen eines Reaktorgefäßes mit einer Flüssigkeit und einem Paar Elektroden, die im Gefäß getragen sind und einen Lichtbogen erzeugen;
   - Bereitstellen eines automatischen Mechanismus zur Steuerung und Optimierung des Bogens über ein elektromechanisches Mittel, das in der Lage ist, die Spannung im Wesentlichen konstant zu halten, und ein Mittel, um besagte Spannung zu optimieren, wodurch die Maximierung des Abstands zwischen der Elektroden ermöglicht wird, um das erzeugte Gas zu maximieren;
   - Bereitstellen einer ersten Leitung, die mit dem oberen Teil des Gefäßes kommuniziert;
   - Bereitstellen einer zweiten Leitung, um die Flüssigkeit zum Raum zwischen den Elektroden zuzuführen;
   - erzwungenes Bewegen der Flüssigkeit, mittels einer Pumpe, durch die zweite Leitung und den Bogen, während
   - mittels besagtem Mechanismus die Spannung des Bogens im Wesentlichen konstant gehalten wird, wodurch ein brennbares Gas durch die Flüssigkeit erzeugt wird, die durch den untergetauchten Bogen hindurchgeht, und der Flüssigkeitsstrom die Elektroden kühlt; und
   - Bewegen des Gases durch die erste Leitung aus dem Gefäß hinaus.

2. Verfahren nach Anspruch 1, wobei der Lichtbogen zwischen einer negativ geladenen Anode (32, 58, 68, 104, 154), die aus einem sich nicht verbrauchenden Wolframmaterial besteht, und einer positiv geladenen Kathode (36, 60, 64, 106, 168), die aus einem Verbrauchsmaterial besteht, entsteht.

3. Verfahren nach Anspruch 1, wobei der Lichtbogen zwischen einer negativ geladenen Anode und einer positiv geladenen Kathode entsteht, wobei sowohl die Anode als auch die Kathode Kohlenstoff sind.

4. Verfahren nach Anspruch 1, wobei der Lichtbogen zwischen einer stabförmigen Wolframanode (104) in relativer Drehbewegung kopfweise auf der Kante einer zylindrischen Kohlenstoffkathode (106) entsteht.

5. Verfahren nach Anspruch 1, wobei der Lichtbogen zwischen hohlen röhrenförmigen Elektroden (58, 60, 64, 68) entsteht.

6. Verfahren nach Anspruch 1, wobei besagte Flüssigkeit durch den Lichtbogen in einer Richtung quer zu einer Richtung des Lichtbogens bewegt wird.

7. Verfahren nach Anspruch 1, wobei besagte Flüssigkeit durch den Bogen in einer Richtung parallel zur Achse der Elektroden bewegt wird.

8. Verfahren nach Anspruch 1, wobei besagte Flüssigkeit durch den Lichtbogen bewegt wird, indem sie durch das Innere einer hohlen Elektrode hindurchgeführt wird.

9. Verfahren nach Anspruch 1, wobei der Flüssigkeitsstrom durch den Lichtbogen so gesteuert wird, so dass die Rekombination von Wasserstoff und Sauerstoff in Wasser nach dessen Auftrennung minimiert wird, wobei eine entsprechende Erhöhung in der Produktion des brennbaren Gases erhalten wird.

10. Verfahren nach Anspruch 1, wobei die erzeugte Hitze, die durch die Verarbeitung der Flüssigkeit erzeugt wird, mittels Wärmetauschern verwendet wird.

11. Verfahren nach Anspruch 1, wobei die Flüssigkeit eine aus Leitungswasser, Brunnenwasser, Seewasser, Meerwasser und nicht-radioaktiver flüssiger Abfall oder Abwasser ist.

12. Verfahren nach Anspruch 1, weiters umfassend den folgenden Schritt: Bereitstellen von Mitteln zum Verarbeiten dieser Flüssigkeit in für die Bewässerung verwendbares Wasser, wobei diese Flüssigkeit flüssiger Abfall aus Haushalten und Gemeinen ist und wobei dieser flüssige Abfall in Wasser recycliert wird, das für Bewässerung, Wärme und feste Präzipitate verwendet werden kann.

13. Verfahren nach Anspruch 12, weiters umfassend den folgenden Schritt: Bereitstellen einer Zentrifuge für ein Entfernen der Präzipitate.

14. Ausrüstung zur Erzeugung eines brennbaren Gases aus einem Lichtbogen, der in eine Wasser und Kohlenstoffteilchen enthaltende Flüssigkeit untergetaucht wird, wobei die Ausrüstung umfasst:

    - ein Reaktorgefäß mit einer Flüssigkeit und einem Paar Elektroden, die im Gefäß getragen sind, um einen Lichtbogen zu erzeugen;
    - einen automatischen Mechanismus zur Steuerung und Optimierung des Bogens über ein elektromechanisches Mittel, das in der Lage ist, die Spannung im Wesentlichen konstant zu halten, und ein Mittel, um besagte Spannung zu optimieren, wodurch die Maximierung des Abstands zwischen der Elektroden ermöglicht wird, um den erzeugten Abstand zu maximieren;
    - eine erste Leitung, die mit dem oberen Teil des Gefäßes kommuniziert;
    - eine zweite Leitung, um die Flüssigkeit zum Raum zwischen den Elektroden zuzuführen, wobei die zweite Leitung eine Pumpe umfasst.

## Revendications

1. Procédé pour la production d'un gaz combustible à partir d'un arc électrique submergé dans un liquide contenant de l'eau et des particules de carbone, le procédé comprenant les étapes consistant à :

    - fournir une cuve de réacteur avec un liquide et une paire d'électrodes soutenues dans la cuve et générer un arc électrique ;
    - fournir un mécanisme automatique pour contrôler et optimiser l'arc par des moyens électromécaniques capables de maintenir la tension essentiellement constante, et des moyens pour optimiser ladite tension, de manière à permettre la maximisation de l'écartement entre les électrodes, afin de maximiser le gaz produit ;
    - fournir une première voie communiquant avec la partie supérieure de la cuve ;
    - fournir une deuxième voie pour distribuer le liquide dans l'espace entre les électrodes ;
    - causer l'écoulement forcé du liquide, au moyen d'une pompe, à travers la deuxième voie et l'arc, et simultanément
    - au moyen dudit mécanisme, maintenir la tension de l'arc essentiellement constante, de telle manière qu'un gaz combustible soit produit par le liquide traversant l'arc submergé et que l'écoulement de liquide refroidisse les électrodes ; et
    - faire passer le gaz à travers la première voie hors de la cuve.

2. Procédé selon la revendication 1, dans lequel l'arc électrique se produit entre une anode négativement chargée (32, 58, 68, 104, 154) composée d'un matériau de tungstène non consommable, et une cathode positivement chargée (36, 60, 64, 106, 168) composée d'un matériau consommable.

3. Procédé selon la revendication 1, dans lequel l'arc électrique se produit entre une anode négativement chargée et une cathode positivement chargée, l'anode et la cathode étant en carbone.

4. Procédé selon la revendication 1, dans lequel l'arc électrique se produit entre une anode en tungstène en forme de tige (104) en mouvement rotatif relatif de tête sur le bord d'une cathode en carbone de forme cylindrique (106).

5. Procédé selon la revendication 1, dans lequel l'arc électrique se produit entre des électrodes tubulaires creuses (58, 60, 64, 68).

6. Procédé selon la revendication 1, dans lequel ledit liquide est mis en circulation à travers l'arc électrique dans une direction transversale à la direction de l'arc électrique.

7. Procédé selon la revendication 1, dans lequel ledit liquide est mis en circulation à travers l'arc dans une direction parallèle à l'axe des électrodes.

**8.** Procédé selon la revendication 1, dans lequel ledit liquide est mis en circulation à travers l'arc électrique en passant à travers l'intérieur d'une électrode creuse.

**9.** Procédé selon la revendication 1, dans lequel le débit de liquide à travers l'arc électrique est contrôlé de manière à réduire au minimum la recombinaison d'hydrogène et d'oxygène en eau après leur séparation, de sorte qu'une augmentation correspondante de la production de gaz combustible est obtenue.

**10.** Procédé selon la revendication 1, dans lequel la chaleur produite générée par le traitement du liquide est utilisée par l'intermédiaire d'échangeurs de chaleur.

**11.** Procédé selon la revendication 1, dans lequel le liquide est l' un parmi de l'eau de distribution, de l'eau de puits, de l'eau de lac, de l'eau de mer, des déchets liquides non radioactifs, ou des eaux usées.

**12.** Procédé selon la revendication 1, comprenant en outre l'étape consistant à :

fournir des moyens pour le traitement dudit liquide en eau utilisable pour l'irrigation, dans lequel ledit liquide est constitué d'eaux usées de résidences ou de municipalités, et dans lequel lesdites eaux usées sont recyclées en eau utilisable pour l'irrigation, la chaleur et les précipités solides.

**13.** Procédé selon la revendication 12, comprenant en outre l'étape consistant à fournir une centrifugeuse pour l'élimination des précipités.

**14.** Équipement pour la production d'un gaz combustible à partir d'un arc électrique submergé dans un liquide contenant de l'eau et des particules de carbone, l'équipement comprenant :

- une cuve de réacteur avec un liquide et une paire d'électrodes soutenues dans la cuve pour générer un arc électrique ;
- un mécanisme automatique pour contrôler et optimiser l'arc via des moyens électromécaniques capables de maintenir la tension pratiquement constante et des moyens pour optimiser ladite tension, de manière à permettre la maximisation de l'écartement entre les électrodes afin de maximiser l'écartement produit ;
- une première voie communiquant avec la partie supérieure de la cuve ;
- une deuxième voie pour distribuer le liquide dans l'espace entre les électrodes, la deuxième voie comprenant une pompe.

FIG. 1

**FIG. 2**

**FIG. 3**

**FIG. 4**

**FIG. 5**

```
Information from Data File:
File        : C:\HPCHEM\1\DATA\0618004.D
Operator    : M
Acquired    :                        . using AcqMethod VOC_IRMS
Sample Name: TOUP'S TECH
Misc Info   : 1ML LOOP; 10C @ ULTRA COLUMN
Vial Number: 1
CurrentMeth: C:\HPCHEM\1\METHODS\DEFAULT.M
```

| Retention Time | Area | Area % | Ratio % |
|---|---|---|---|
| Total Ion Chromatogram | | | |
| 2.474 | 1753306 | 5.386 | 32.724 |
| 2.644 | 5091514 | 15.641 | 95.030 |
| 4.754 | 641528 | 1.971 | 11.974 |
| 6.307 | 2737749 | 8.411 | 51.098 |
| 6.390 | 2211258 | 6.793 | 41.272 |
| 7.782 | 592472 | 1.820 | 11.058 |
| 8.490 | 2357396 | 7.242 | 43.999 |
| 8.754 | 2784829 | 8.555 | 51.977 |
| 8.882 | 5357812 | 16.460 | 100.000 |
| 9.265 | 1123809 | 3.452 | 20.975 |
| 9.448 | 2421234 | 7.438 | 45.191 |
| 10.098 | 1946292 | 5.979 | 36.326 |
| 14.177 | 2129791 | 6.543 | 39.751 |
| 15.073 | 435208 | 1.337 | 8.123 |
| 16.085 | 389822 | 1.198 | 7.276 |
| 19.509 | 577433 | 1.774 | 10.777 |

## FIG. 6

Library Searched : C:\DATABASE\WILEY138.L
Quality         : 37
ID              : Tris(methylseleno)[13C]methane

**FIG. 7**

TRC of C:\HPCHEM\1\DATA\0618001.D

**FIG. 8**

Search Method for C:\HPCHEM\1\DATA\0618003.D\AVE1_8.IDS

Sample Name = AVE1_8.SPC

Mask Used = None

Text Search = None

Peak Search = Forward

Full Spectrum Search = Euclidian Distance

Custom Search = None

FIG. 9

31

C:\HPCHEM\1\DATA\0619002.D\AVE4_0.SPC

Hit #1 ACETAMIDE, 2-HYDROXY-N-PHENYL (RA001217)

**FIG. 10**

**FIG. 11**

FIG. 12

34

**FIG. 13**

**FIG. 14**

**FIG. 15**

FIG 16A

FIG 16B

FIG 17

FIG 18A

FIG 18B

FIG 19

EP 1 409 129 B1

# FIG 20

60

58

62

+

−

FIG 21

66

64

64

+ −

EP 1 409 129 B1

43

76

70

FIG 22A

74

72

74

N    S        S        N        76

82

80

78

FIG 22B

## FIG 23A

## FIG 23B

FIG 24

EP 1 409 129 B1

FIG 25

FIG 26

FIG 27

FIG 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 13334898 A
- US 10617098 A
- US 78579797 A
- US 25437794 A
- US 603058 A, H. Eldridge
- US 1898 A
- US 5159900 A, W. A. Dammann and D. Wallman
- US 5435274 A, W. H. Richardson, Jr.
- US 5417817 A, W. A. Dammann and D. Wallman
- US 5692459 A, W. H. Richardson, Jr.
- US 5792325 A, W. H. Richardson, Jr.
- US 569245 A, W. H. Richardson, Jr.
- US 09106170 B

### Non-patent literature cited in the description

- **R. M. SANTILLI.** *Hadronic Journal,* 1978, vol. 1, 574-901
- **R. M. SANTILLI.** Elements of Hadronic Mechanics. Ukraine Academy of Sciences, 1995, vol. I, II
- **R. M. SANTILLI.** *Foundations of Physics,* 1997, vol. 27, 625-729
- **A. O. E. ANIMALU ; R. M. SANTILLI.** *International Journal of Quantum Chemistry,* 1995, vol. 29, 175-187
- **R. M. SANTILLI ; D. D. SHILLADY.** *Hadronic Journal,* December 1998, vol. 21 (6
- A new isochemical model of the hydrogen molecule'', and ''A new isochemical model of the water molecule. **R. M. SANTILLI ; D. D. SHILLADY.** International Journal of Hydrogen Energy. Elsevier Science Publisher
- **R. M. SANTILLI ; D. D. SHI!LADY.** *Ab Initio Hadronic Chemistry*
- **R. M. SANTILLI.** *Hadronic Journal,* 1998, vol. 21, 789-894
- **M. H. KUCHERENKO ; A. K. ARINGAZIN.** *Hadronic Journal,* 1998, vol. 21, 895-902
- **R. M. SANTILLI.** *Second Certification,* 16 October 1998, http://www.toupstech.com/aquafuel/aquall.html